(19) Europäisches Patentamt
European Patent Office
Office européen des brevets

(11) **EP 3 104 323 A1**

(12) **EUROPEAN PATENT APPLICATION**

(43) Date of publication:
14.12.2016 Bulletin 2016/50

(51) Int Cl.:
*G06Q 30/02* (2012.01)    *G06Q 50/06* (2012.01)

(21) Application number: 16173288.8

(22) Date of filing: 07.06.2016

| | |
|---|---|
| (84) Designated Contracting States:<br>AL AT BE BG CH CY CZ DE DK EE ES FI FR GB GR HR HU IE IS IT LI LT LU LV MC MK MT NL NO PL PT RO RS SE SI SK SM TR<br>Designated Extension States:<br>**BA ME**<br>Designated Validation States:<br>**MA MD**<br><br>(30) Priority: **11.06.2015 JP 2015118493**<br><br>(71) Applicant: **Hitachi, Ltd.**<br>**Tokyo 100-8280 (JP)** | (72) Inventors:<br>• OKAMOTO, Yoshihisa<br>Chiyoda-ku, Tokyo 100-8280 (JP)<br>• WATANABE, Tohru<br>Chiyoda-ku, Tokyo 100-8280 (JP)<br>• UTSUMI, Masato<br>Chiyoda-ku, Tokyo 100-8280 (JP)<br>• TERASHITA, Masao<br>Chiyoda-ku, Tokyo 100-8280 (JP)<br><br>(74) Representative: **Moore, Graeme Patrick et al**<br>**Mewburn Ellis LLP**<br>**City Tower**<br>**40 Basinghall Street**<br>**London EC2V 5DE (GB)** |

(54) **ELECTRIC POWER BUSINESS PROFIT AND LOSS CALCULATION SYSTEM AND ELECTRIC POWER BUSINESS PROFIT AND LOSS CALCULATION METHOD**

(57) The profit from an electric power business is calculated with high reliability conforming to an actual situation. A storage unit stores a plurality of consumer classes, each consumer class including standard attribute data which is an attribute of the consumer class, and a standard load data stream that indicates a load curve that represents the consumer class. The storage unit stores a plurality of rate menu classes, each rate menu class including a unit price rate of electricity usage and contractor data that indicates a contractor of the rate menu class among the plurality of consumers. A total income calculation unit calculates a total income from business of electric power supply to the plurality of consumers, based on the plurality of consumer classes and the plurality of rate menu classes.

**FIG. 1**

ELECTRIC POWER BUSINESS PROFIT AND LOSS CALCULATION SYSTEM 1

**Description**

BACKGROUND OF THE INVENTION

Field of the Invention

The present invention relates to an electric power business profit and loss calculation system.

Description of the Related Art

In execution of electric power businesses, it is necessary to calculate the profit and loss of an electric power business in a business execution period. Since the profit and loss of an electric power business are influenced by the contract rate signed by a consumer and the amount of electricity sold, it is necessary to calculate the profit using these factors.

For example, Japanese Patent Application Publication No. 2008-059125 discloses an electric power business profit and loss analysis system that calculates an electricity rate profit from the amount of electricity usage of each consumer divided by a predetermined proportion at each time the profit and loss were calculated using expected demand data with respect to the demand in an entire simulation period in order to calculate the profit of a business according to the Monte Carlo simulation.

Patent Literature 1: Japanese Laid-open Patent Publication No. 2008-059125

In the electric power business profit and loss analysis system disclosed in Patent Literature 1, the amount of electricity usage of the consumer at each time is generated from the data recorded in a table. However, the actual consumer's usage of electricity of the consumer is influenced by a unique pattern which depends on a power facility possessed by the consumer, a change in the unit price of an electricity rate, and when the usage pattern is periodic, the amount of electricity usage in an immediately previous time point or earlier. Due to this, since it is not possible to estimate the amount of electricity usage corresponding to the actual situation of the consumer, it is not possible to calculate the profit and loss of an electric power business correctly.

SUMMARY OF THE INVENTION

In order to solve the above-described problems, an electric power business profit and loss calculation system according to an aspect of the present invention includes a storage unit and a total income calculation unit connected to the storage unit. The storage unit is configured to store consumer attribute data which is an attribute of electricity usage of each of a plurality of consumers. The storage unit stores a load data stream indicating fluctuation in an amount of electricity usage measured for each of the plurality of consumers. The storage unit is configured to store a plurality of consumer classes, each consumer class including standard attribute data which is an attribute of the consumer class and a standard load data stream indicating a load curve that represents the consumer class. The storage unit is configured to store a plurality of rate menu classes, each rate menu class including a unit price rate of electricity usage and contractor data indicating a contractor of the rate menu class among the plurality of consumers. The total income calculation unit is configured to calculate a total income from business of electric power supply to the plurality of consumers, based on the plurality of consumer classes and the plurality of rate menu classes.

According to the present invention, it is possible to calculate the profit of an electric power business with high reliability conforming to an actual situation.

BRIEF DESCRIPTION OF THE DRAWINGS

FIG. 1 is a diagram illustrating an overall configuration of an electric power business profit and loss calculation system;
FIG. 2 is a block diagram illustrating a schematic configuration of a total income calculator;
FIG. 3 is a block diagram illustrating a schematic configuration of a total expenditure calculator;
FIG. 4 is a block diagram illustrating a block diagram illustrating the flow of a series of processes executed by the electric power business profit and loss calculation system;
FIG. 5 is a conceptual diagram illustrating a schematic configuration of an electricity usage pattern class;
FIG. 6 is a conceptual diagram illustrating a schematic configuration of a consumer class;
FIG. 7 is a conceptual diagram illustrating a schematic configuration of a rate menu class;
FIG. 8 is a flowchart illustrating a processing procedure of an electricity usage pattern class generation process;
FIG. 9 is a flowchart illustrating a processing procedure of a clustering process;

FIG. 10 is a flowchart illustrating a processing procedure of a cluster number appropriateness evaluation value calculation process;

FIG. 11 is a flowchart illustrating a processing procedure of an optimal cluster number determining process;

FIG. 12 is a characteristic curve diagram provided for description of the optimal cluster number determining process;

FIG. 13 illustrates the relation between a cluster number and the accuracy of a representative load data stream;

FIG. 14 illustrates a consumer class registration screen;

FIG. 15 is a conceptual diagram illustrating registered consumer classes;

FIG. 16 illustrates initial standard load curves;

FIG. 17 is a flowchart illustrating a processing procedure of a consumer class customization process;

FIG. 18 is a flowchart illustrating a processing procedure of a diagnosis decision tree generation process;

FIG. 19 is a flowchart illustrating a processing procedure of a classification attribute extraction process;

FIG. 20 is a conceptual diagram provided for description of the classification attribute extraction process;

FIG. 21 is a flowchart illustrating a processing procedure of a standard load curve updating process;

FIG. 22 is a flowchart illustrating a processing procedure of a subscription condition adding process;

FIG. 23 is a flowchart illustrating a processing procedure of a consumer response model creation process;

FIG. 24 is a conceptual diagram provided for description of the consumer response model creation process;

FIG. 25 is a flowchart illustrating a processing procedure of a consumer response estimation process;

FIG. 26 is a flowchart illustrating a processing procedure of a sales income calculation process;

FIG. 27 is a flowchart illustrating a processing procedure of a supply cost calculation process;

FIG. 28 is a flowchart illustrating a processing procedure of a rate menu optimization process; and

FIG. 29 is a conceptual diagram provided for description of the rate menu optimization process.

DESCRIPTION OF THE PREFERRED EMBODIMENT

Hereinafter, an embodiment of the present invention will be described with reference to the drawings.

(1) Overall Configuration

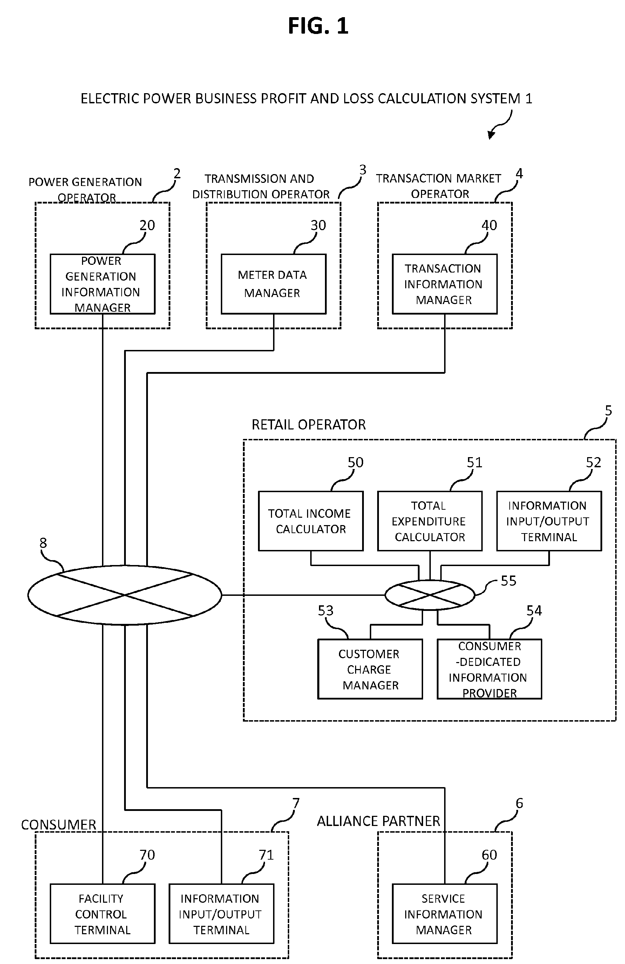

FIG. 1 illustrates an overall configuration of an electric power business profit and loss calculation system 1 according to the present embodiment. The electric power business profit and loss calculation system 1 has a configuration in which a power generation information manager 20 of a power generation operator 2, a meter data manager 30 of a transmission and distribution operator 3, a transaction information manager 40 of a transaction market operator 4, a total income calculator 50, a total expenditure calculator 51, an information input/output terminal 52, a customer charge manager 53, and a consumer-dedicated information provider 54 of a retail operator 5, a service information manager 60 of an alliance partner 6, and a facility control terminal 70 and an information input/output terminal 71 of a consumer 7 are connected by a network 8. The total income calculator 50, the total expenditure calculator 51, the information input/output terminal 52, the customer charge manager 53, and the consumer-dedicated information provider 54 of the retail operator 5 are connected to the network 8 via a network 55.

The facility control terminal 70 of the consumer 7 includes a smart meter (a watt-hour meter for the retail operator 5, a watt-hour meter installed independently by the consumer 7, or the like), for example. The facility control terminal 70 measures fluctuation in the amount of electricity usage of the consumer 7 to obtain meter data and transmits the meter data to the meter data manager 30 of the transmission and distribution operator 3. The meter data includes samples in respective predetermined sampling cycles. The sampling cycle is 30 minutes, for example. The sample may be an integrated value of the amount of electricity usage and a difference between integrated values in respective sampling cycles. Moreover, the sample may be the amount of electricity used by a consumer in one sampling cycle and may be an average amount of electricity in one sampling cycle. Moreover, the information input/output terminal 71 of each consumer 7 is a personal computer having a browser installed therein, for example, and includes a processing device, a communication device, an input device, and a display device. The information input/output terminal 71 is used for allowing the consumer 7 to access the consumer-dedicated information provider 54 of the retail operator 5.

The meter data manager 30 of the transmission and distribution operator 3 is a server apparatus having a function of accumulating and managing meter data transmitted from the facility control terminals 70 of respective consumers 7. The meter data manager 30 periodically transmits the accumulated meter data of the respective consumers 7 to the total income calculator 50 of the retail operator 5.

The transaction information manager 40 of the transaction market operator 4 is a server apparatus having a function of performing a process of distributing information such as a contract price and a contract amount of each electricity product traded in a market and gathering orders received of respective business operators.

The total income calculator 50 of the retail operator 5 is a computer apparatus having a function of extracting a load data stream which is a data stream in a predetermined measurement period from meter data of each consumer, received from the meter data manager 30, classifies consumers based on the load data stream, and calculating the sales income of the retail operator 5. The meter data may be stored in a device other than the meter data manager 30 and be acquired by the total income calculator 50. The total expenditure calculator 51 is a computer apparatus having a function of calculating the supply cost of the retail operator 5. Moreover, the information input/output terminal 52 of the retail operator 5 is a personal computer, for example, and includes a processing device, a communication device, an input device, and a display device. The information input/output terminal 52 is used when the retail operator 5 inputs information necessary for calculating the sales income and the supply cost and when checking a calculation result, for example.

The customer charge manager 53 of the retail operator 5 is a server apparatus having a function of calculating and charging the fee of each consumer 7. Further, the customer charge manager 53 stores consumer attribute data indicating the attribute of each consumer. The attribute includes contract information necessary for an electricity sales contract such as a power receiving voltage. The attribute may further include information other than the contract information such as an alliance partner contract. Further, the customer charge manager 53 stores consumer contract data indicating a rate menu class signed by each consumer. Further, the customer charge manager 53 stores history data of the amount of merit that a consumer enjoys by signing on a rate menu class and history data of the number of contractors of each rate menu class. The amount of merit is a discount rate of the fee provided by the corresponding rate menu class. Further, the customer charge manager 53 stores meter identification data indicating a meter ID for identifying a smart meter that measures the amount of electricity usage of a consumer for respective consumer IDs for identifying consumers. When a plurality of smart meters including a watt-hour meter installed by the retail operator 5 and a watt-hour meter installed by the consumer are installed for a certain consumer, the meter identification data associates a plurality of meter IDs with the consumer ID of the consumer. The consumer attribute data, the history data of the amount of merit, and the history data of the number of contractors may be stored in the total income calculator 50 and may be stored in another device and be acquired by the total income calculator 50.

Moreover, the consumer-dedicated information provider 54 of the retail operator 5 includes a general-purpose server apparatus and is used for proposing a new rate menu to the consumer 7, for example.

The service information manager 60 of the alliance partner 6 is a server apparatus having a function of distributing information on the content and the price of a service of the alliance partner 6.

(2) Internal Configuration

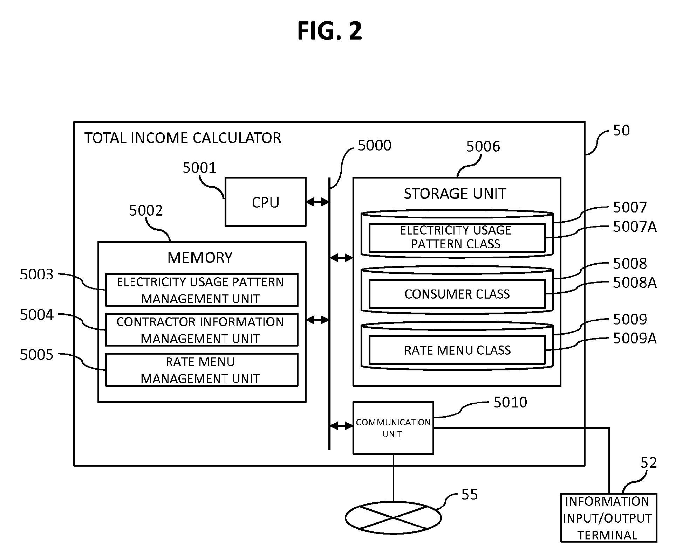

FIG. 2 illustrates a schematic configuration of the total income calculator 50 of the retail operator 5. As illustrated in FIG. 2, the total income calculator 50 includes a CPU 5001, a memory 5002, a storage unit 5006, and a communication unit 5010 connected to each other via an internal bus 5000.

The CPU 5001 is a processor that controls the operation of the total income calculator 50. Moreover, the memory 5002 is used for temporarily storing various programs and data mainly. An electricity usage pattern management unit 5003, a contractor information management unit 5004, a rate menu management unit 5005 which will be described later are also stored and maintained in the memory 5002.

The storage unit 5006 includes a hard disk device, for example, and is used for maintaining programs and data for a long period. An electricity usage pattern class storage unit 5007, a consumer class storage unit 5008, and a rate menu class storage unit 5009 which will be described later are stored and maintained in the storage unit 5006. The storage unit 5006 may store data received from the meter data manager 30, the customer charge manager 53, the total expenditure calculator 51, the information input/output terminal 52, and the like.

The communication unit 5010 controls protocols during communication via the network 55 among the total expenditure calculator 51, the information input/output terminal 52, the customer charge manager 53, and the consumer-dedicated information provider 54.

The plurality of devices of the retail operator 5 may be a single device. The function of the device of the retail operator 5 may be included in another device. Moreover, the retail operator 5 may include any one of the power generation operator 2 and the transmission and distribution operator 3.

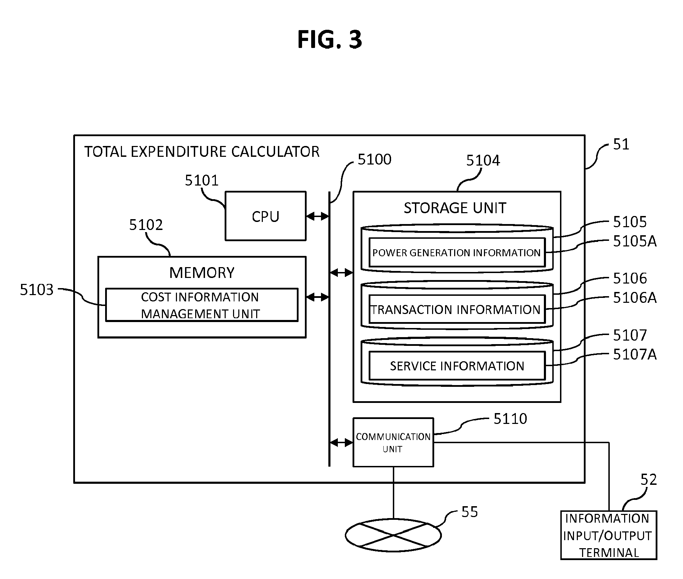

FIG. 3 illustrates a schematic configuration of the total expenditure calculator 51 of the retail operator 5. As illustrated in FIG. 3, the total expenditure calculator 51 includes a CPU 5101, a memory 5102, a storage unit 5104, and a communication unit 5110 which are connected to each other via an internal bus 5100.

The CPU 5101 is a processor that controls the operation of the total expenditure calculator 51. Moreover, the memory 5102 is used for temporarily storing various programs and data mainly. A cost information management unit 5103 described later is also stored and maintained in the memory 5102.

The storage unit 5104 includes a hard disk device, for example, and is used for maintaining programs and data for a long period. A power generation information storage unit 5105, a transaction information storage unit 5106, and a service information storage unit 5107 which will be described later are also stored and maintained in the storage unit 5104.

The communication unit 5110 controls protocols via the network 55 during communication among the total income calculator 50, the information input/output terminal 52, the customer charge manager 53, and the consumer-dedicated information provider 54.

(3) Process Flow in Electric Power Business Profit and Loss Calculation System

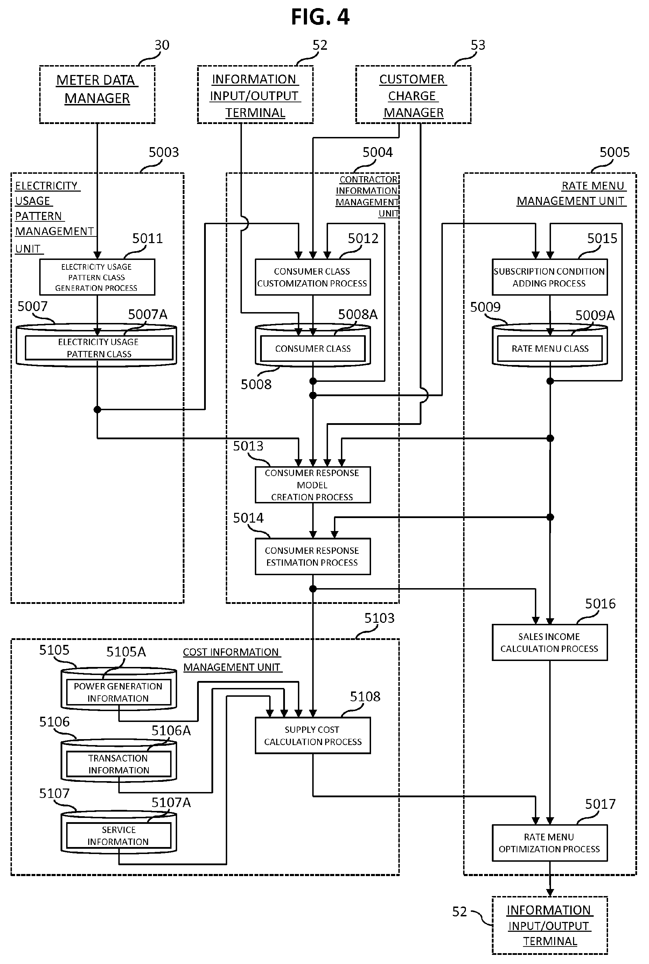

Next, referring to FIG. 4, the flow of processes in the electric power business profit and loss calculation system 1 according to the present embodiment will be described.

The electricity usage pattern management unit 5003 includes an electricity usage pattern class generation process 5011 and an electricity usage pattern class storage unit 5007. The contractor information management unit 5004 includes a consumer class customization process 5012, a consumer class storage unit 5008, a consumer response model creation process 5013, and a consumer response estimation process 5014. The rate menu management unit 5005 includes a subscription condition adding process 5015, a rate menu class storage unit 5009, a sales income calculation process 5016, and a rate menu optimization process 5017. The cost information management unit 5103 includes a power generation information storage unit 5105, a transaction information storage unit 5106, a service information storage unit 5107 and a supply cost calculation process 5108. The electricity usage pattern class storage unit 5007 stores an electricity usage pattern class table 5007A. The consumer class storage unit 5008 includes a consumer class table 5008A. The rate menu class storage unit 5009 stores a rate menu class table 5009A. The power generation information storage unit 5105 includes power generation information 5105A. The transaction information storage unit 5106 stores transaction information 5106A. The service information storage unit 5107 stores service information 5107A.

The electricity usage pattern class generation process 5011 generates the electricity usage pattern class table 5007A based on the meter data of each consumer 7, received from the meter data manager 30. The electricity usage pattern class table 5007A includes an electricity usage pattern class ID for identifying electricity usage pattern classes, an information item name of the corresponding electricity usage pattern class, and an information item value of the corresponding electricity usage pattern class.

The consumer class customization process 5012 generates the consumer class table 5008A based on the consumer attribute data received from the customer charge manager 53 and corrects the consumer class table 5008A based on the consumer attribute data and the electricity usage pattern class table 5007A. The consumer class table 5008A includes a consumer class ID for identifying consumer classes, an information item name of a corresponding consumer class, and an information item value of the corresponding consumer class.

The consumer response model creation process 5013 generates a consumer response model for estimating the number of contractors responded to the amount of merit provided to the consumer 7 based on revision of a rate menu based on the history data received from the customer charge manager 53, the electricity usage pattern class table 5007A, the consumer class table 5008A, and the rate menu class table 5009A.

The consumer response estimation process 5014 estimates the number of contractors responded to the amount of merit provided to the consumer 7 based on revision of the rate menu based on the rate menu class table 5009A and the consumer response model created by the consumer response model creation process 5013.

The subscription condition adding process 5015 adds such a subscription condition that limits a consumer to be induced based on revision of the rate menu to the rate menu class table 5009A set in advance by the retail operator 5 based on the consumer class table 5008A.

The sales income calculation process 5016 calculates a total income of the retail operator 5 based on the rate menu class table 5009A and the number of responded contractors estimated by the consumer response estimation process 5014.

The supply cost calculation process 5108 calculates a total expenditure of the retail operator 5 based on the power generation information 5105A, the transaction information 5106A, and the service information 5107A.

The rate menu optimization process 5017 determines an appropriate rate menu capable of maximizing the profit of the retail operator 5 based on the total income calculated by the sales income calculation process 5016 and the total expenditure calculated by the supply cost calculation process 5108. The rate menu optimization process 5017 outputs the determined rate menu to the information input/output terminal 52.

(4) Details of Databases

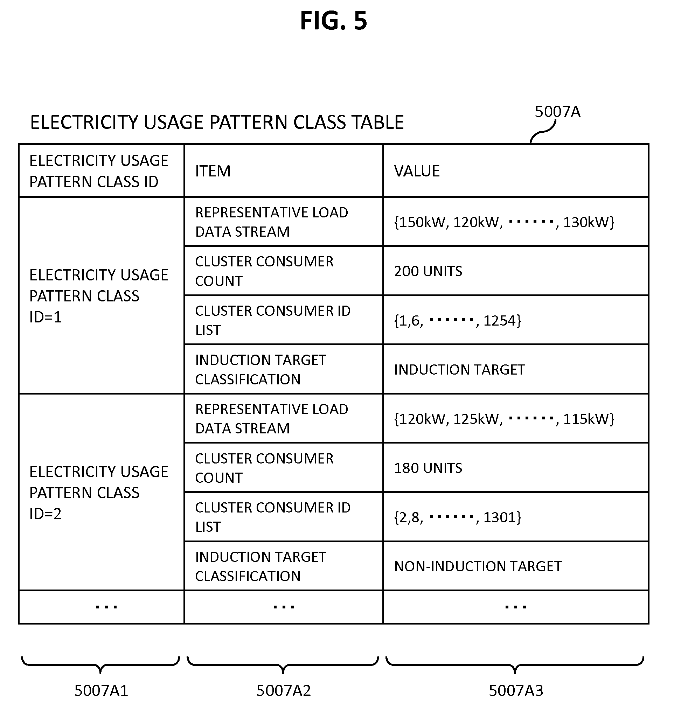

FIG. 5 illustrates a conceptual diagram of the electricity usage pattern class table 5007A. The electricity usage pattern class table 5007A is information created by the electricity usage pattern class generation process 5011. The electricity usage pattern class table 5007A is a table used for managing the electricity usage pattern classes. Each electricity usage pattern class corresponds to a cluster classified based on the characteristics of the load data stream of the consumer.

Specifically, the electricity usage pattern class table 5007A has entries of respective electricity usage pattern classes. The entry of one electricity usage pattern class includes an electricity usage pattern class ID field 5007A1, an item field 5007A2, and a value field 5007A3.

An electricity usage pattern class ID which is an identification number of an electricity usage pattern class is stored in the electricity usage pattern class ID field 5007A1. Information item names ("representative load data stream," "cluster consumer count," "cluster consumer ID list," and "induction target classification of electricity usage pattern class") of the corresponding electricity usage pattern class are stored in the item field 5007A2. The value of each information item of the corresponding electricity usage pattern class is stored in the value field 5007A3.

The representative load data stream is a data stream indicating a representative load curve which is a load curve that represents the electricity usage pattern class. The cluster consumer count is the number of consumers belonging to the corresponding electricity usage pattern class. The cluster consumer ID list (association data) is a set of consumer IDs of the consumers belonging to the corresponding electricity usage pattern class.

In the example of FIG. 5, for the electricity usage pattern class to which "1" is assigned as the electricity usage pattern class ID, the representative load data stream is set to "{150kW, 120kW, ..., 130kW}," the cluster consumer count is set to "200," the cluster consumer ID list is set to "1, 6, ..., 1254," and the induction target classification is set to "induction target." The representative load data stream is a data stream which has samples for respective sampling cycles and has the length of a measurement period similarly to the load data stream.

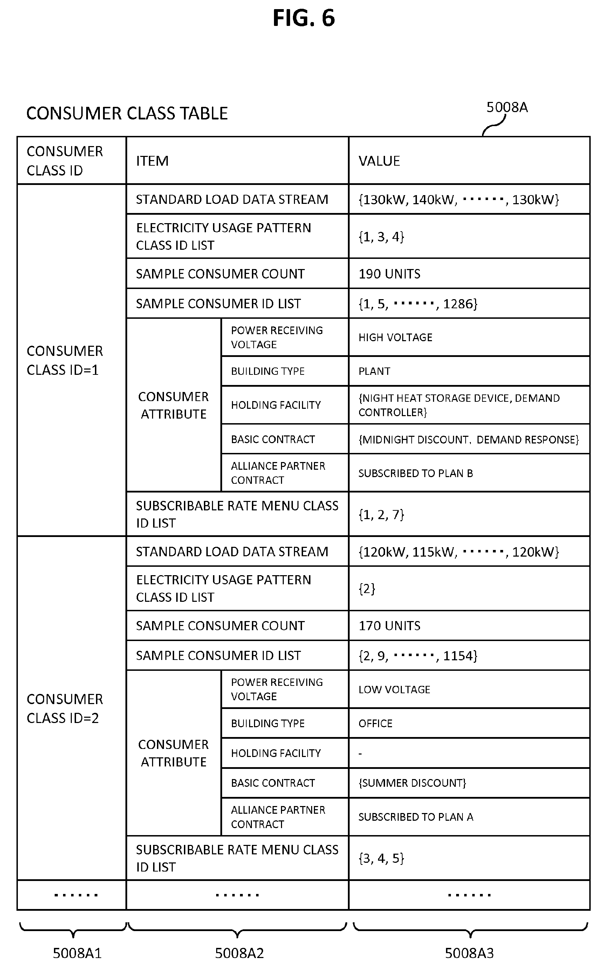

FIG. 6 illustrates a conceptual diagram of the consumer class table 5008A. The consumer class table 5008A is a table used for managing the consumer classes indicating the classification of consumers based on consumer attribute data.

Specifically, the consumer class table 5008A has entries for respective consumer classes. The entry of one consumer class includes a consumer class ID field 5008A1, an item field 5008A2, and a value field 5008A3.

A consumer class ID which is an identification number of a consumer class is stored in the consumer class ID field 5008A1. Information item names ("standard load data stream," "electricity usage pattern class ID list," "sample consumer count," "sample consumer ID list," "attribute information," and "subscribable rate menu class ID list") of the corresponding consumer class are stored in the item field 5008A2. The standard load data stream is a data stream indicating a standard load curve which is a load curve that represents the corresponding consumer class. The electricity usage pattern class ID list indicates electricity usage pattern classes including consumers included in the corresponding consumer class. The sample consumer count is the number of consumers included in the corresponding consumer class. The sample consumer ID list is a set of consumer IDs of consumers included in the corresponding consumer class. The attribute information (standard attribute data) includes at least one attribute item and an attribute value which is the value of the attribute item. The attribute information is the attribute value common to the consumer attribute data of consumers belonging to the corresponding consumer class. The attribute item includes "power receiving voltage," "holding facility," "building type," and "alliance partner contract," for example. The subscribable rate menu class ID list indicates rate menu class IDs of rate menu classes subscribable by a consumer having the attribute information of the corresponding consumer class. The value of each information item of the corresponding consumer class is stored in the value field 5008A3. The attribute value is stored in the value field 5008A3 corresponding to an attribute item.

In the example of FIG. 6, for the consumer class to which "1" is assigned as the consumer class ID, the standard data stream is set to "130kW, 140kW, ..., 130kW}," the electricity usage pattern class ID list is set to "{1, 3, 4}," the sample consumer count is set to "190," and the sample consumer ID list is set to "1, 5, ..., 1286." The standard data stream is a data stream which has samples for respective sampling cycles and has the length of a measurement period similarly to the load data stream. Moreover, as the attribute information of the consumer class, the power receiving voltage is set to "high voltage," the holding facility is set to "night heat storage device," the building type is set to "plant," and the alliance partner contract is set to "B plan." The attribute information of the consumer class is not limited to the above-mentioned example, but information such as a floor area or the population in a building may be included as the attribute item. Moreover, as the rate menu subscribable by a consumer having the attribute information of the consumer class, the subscribable rate menu class ID list is set to "{1, 2, 7}."

Since the attribute information includes information on a contract, it is possible to create the consumer attribute data based on a contract and to extract the attribute information from the consumer attribute data.

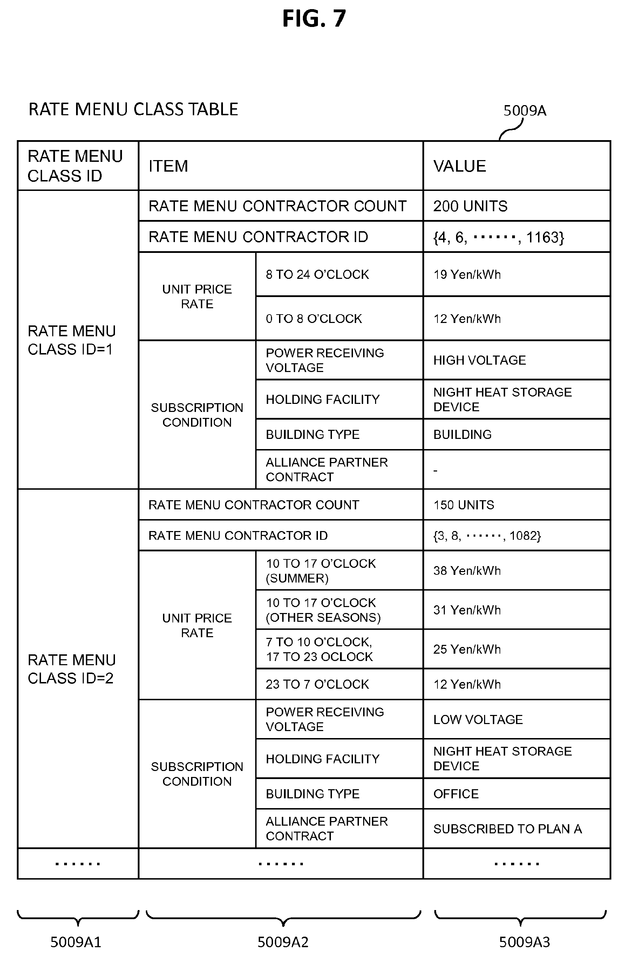

FIG. 7 illustrates a conceptual diagram of the rate menu class table 5009A. The rate menu class table 5009A is a table used for managing rate menu classes to which the consumer 7 subscribes.

Specifically, the rate menu class table 5009A has entries for respective rate menu classes. The entry of one rate menu class includes a rate menu class ID field 5009A1, an item field 5009A2, and a value field 5009A3.

Rate menu class IDs which are identification numbers for identifying rate menu classes are stored in the rate menu class ID field 5009A1. Information item names ("rate menu contractor count," "rate menu contractor ID," "unit price rate," and "subscription condition") of the corresponding rate menu class are stored in the item field 5009A2. The unit price rate is a unit price rate in each time period classified by season and time. The subscription condition includes the same attribute items as the attribute information of the consumer class. The value of each information item of the corresponding rate menu class is stored in the value field 5009A3. The value in each time period is stored in the value field 5009A3 corresponding to the unit price rate. The value of each attribute item is stored in the value field 5009A3 corresponding to the subscription condition. Another contractor data indicating the contractor of the corresponding rate menu class may be used instead of the rate menu contractor count and the rate menu contractor ID.

In the example of FIG. 7, for the rate menu class to which "1" is assigned as the rate menu class ID, the rate menu contractor count is set to "200" and the IDs of these contractors are set to "4, 6, ..., 1163." Moreover, the unit price rate is set to "19 yen/kWh" in a time period of 8 to 22 o'clock (summer season), "17 yen/kWh" in a time period of 8 to 22 o'clock (other seasons), and "12 yen/kWh" in a time period of 22 to 8 o'clock. Moreover, as the subscription condition for the rate menu class, the power receiving voltage is set to "high voltage," the holding facility is set to "night heat storage device," and the building type is set to "building." The subscription condition for the rate menu class is not limited to the above-mentioned example, but is sequentially updated by the subscription condition adding process 5015.

Moreover, the rate menu contractor count and the rate menu contractor ID are sequentially updated by the subscription condition adding process 5015 based on the consumer contract data of the customer charge manager 53.

Since the rate menu class includes the subscription condition based on the attribute information, it is possible to induce a consumer to a specific rate menu class based on the attribute information.

(5) Details of Each Process Flow

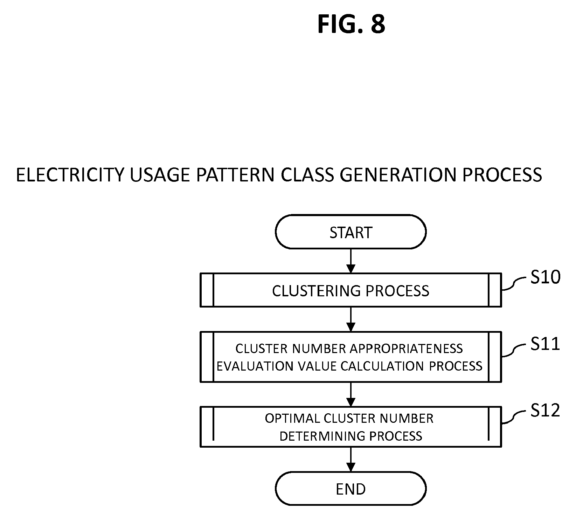

An actual processing procedure of the electric power business profit and loss calculation system 1 will be described with reference to FIG. 8 and the subsequent drawings. The processes of the electricity usage pattern management unit 5003, the contractor information management unit 5004, and the rate menu management unit 5005 in the total income calculator 50 are programs stored in the memory 5002 and are executed by the CPU 5001. Hereinafter, the operations of the respective processes by the CPU 5001 of the total income calculator 50 will be described using the respective processes as a subject. The respective processes of the cost information management unit 5103 in the total expenditure calculator 51 are programs stored in the memory 5102 and are executed by the CPU 5101. Hereinafter, the operations of the respective processes by the CPU 5101 of the total expenditure calculator 51 will be described using the respective processes as a subject.

(5-1) Electricity Usage Pattern Class Generation Process

The electricity usage pattern class generation process 5011 is a process of classifying load data streams of respective consumers 7 in respective clusters having similar forms to calculate a representative load data stream indicating a representative load curve of each cluster.

An example of this process will be described with reference to the flowchart of FIG. 8.

First, in step S10, the electricity usage pattern class generation process 5011 acquires meter data of a meter ID associated with the consumer IDs of respective consumers 7 based on the meter identification data from the meter data manager 30 of the transmission and distribution operator 3 and starts the process illustrated in FIG. 8 when the load data streams corresponding to the consumer IDs are calculated. First, the electricity usage pattern class generation process 5011 executes a clustering process of obtaining a cluster center set $\{C_k: k=1, 2, ..., K\}$ which is a set of cluster centers of respective clusters when the acquired M load data streams (M is the number of consumers 7) were classified into K clusters (K=1 to M). Specifically, the electricity usage pattern class generation process 5011 sorts the M load data streams to K clusters to obtain the cluster center set $\{C_k\}$ corresponding to K according to the k-means method while sequentially changing the cluster number K from 1 to M in such a manner to obtain a cluster center set $\{C_1\}$ of one cluster when the load data streams of all consumers were classified to one cluster, a cluster center set $\{C_1, C_2\}$ of two clusters when the load data streams were classified to two clusters, a cluster center set $\{C_1, C_2, C3\}$ of three clusters when the load data streams were classified to three clusters, and the like.

Subsequently, in step $S_{11}$, the electricity usage pattern class generation process 5011 executes a cluster number appropriateness evaluation value calculation process of calculating a value (hereinafter referred to as an appropriateness evaluation value) for evaluating whether it is appropriate to set the cluster number K to a certain value based on the processing result of step S10. In the case of the present embodiment, the electricity usage pattern class generation process 5011 calculates an intra-cluster conformity indicating the degree of orderedness of the load data streams in the individual clusters and an inter-cluster average separation indicating the degree of separation between clusters as the appropriateness evaluation value.

Finally, in step S12, the electricity usage pattern class generation process 5011 executes an optimal cluster number determining process of determining an optimal cluster number based on the intra-cluster conformity and the inter-cluster average separation calculated in step S11.

With the above-described processes, the load data streams of the respective consumers 7 are classified into an appropriate number of clusters.

(5-1-1) Clustering Process

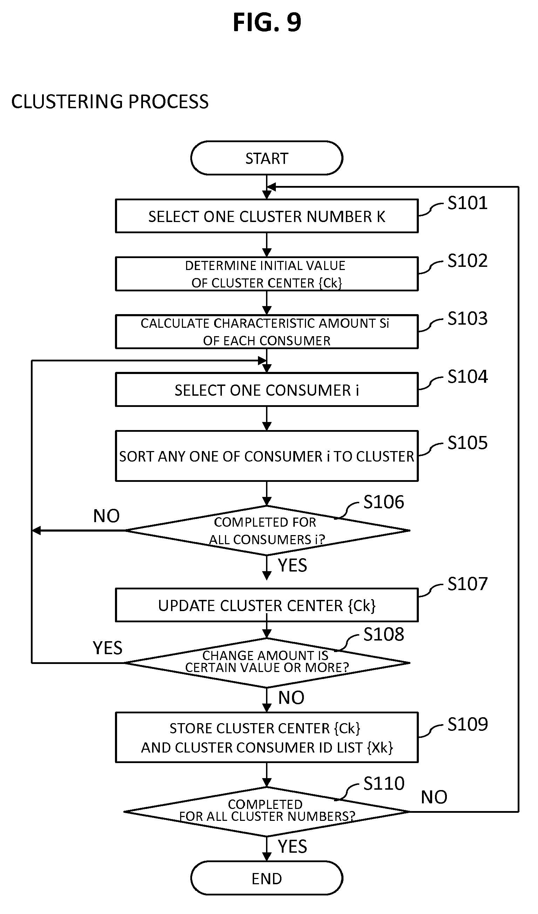

FIG. 9 illustrates a specific processing content of the clustering process executes in step S10 of the electricity usage pattern class generation process 5011.

First, the electricity usage pattern class generation process 5011 assumes that the cluster number (the number of electricity usage pattern classes) K is any one of 1 to M (S101) to set the initial values of the cluster center sets {$C_k$: k=1, 2, ..., K} (S102). The initial value may be an arbitrary value and an execution result of a previous clustering process may be used, for example.

Subsequently, the electricity usage pattern class generation process 5011 acquires the meter data corresponding to a predetermined measurement period of each consumer i {i=1, 2, ..., M} and normalizes the acquired meter data to calculate a load data stream. Another load data stream such as the meter data corresponding to the measurement period or a load data stream divided into a period shorter than the measurement period may be used instead of the load data stream. Moreover, the electricity usage pattern class generation process 5011 calculates a characteristic amount $S_i$ {$S_{i,1}$, $S_{i,2}$, ..., $S_{i,t}$} of the load data stream (S103). The measurement period is one year, for example. In the present embodiment, the electricity usage pattern class generation process 5011 calculates the load data stream by normalizing the meter data so that the average of the load data stream is 0 and the standard deviation of the load data stream is 0. The electricity usage pattern class generation process 5011 can collect load data streams having similar forms as clusters without being influenced by the magnitude of the meter data by calculating the normalized load data stream. The load data stream includes many periodic components. Each component has cycles such as hour, day, week, and year. Moreover, in the present embodiment, the electricity usage pattern class generation process 5011 uses the results of discrete Fourier transform on the load data streams of the respective consumers i as the characteristic amounts Si of the consumers i in order to perform clustering using the periodic property of the load data streams. Moreover, the characteristic amount Si may be information other than the result of discrete Fourier transform, the time-series data itself of the load data stream, and the statistical data of the load data stream such as a combination of an average, the largest value, and the smallest value of the load data streams as long as the information indicates the characteristics of the load data streams of the consumers i. In this example, the cluster k is a set of characteristic amounts and the cluster center $C_k$ is the characteristic amount that represents the cluster k.

Subsequently, the electricity usage pattern class generation process 5011 selects one non-processed consumer i among all consumers (S104). Moreover, the electricity usage pattern class generation process 5011 calculates a Euclidean distance for the consumer i between each cluster center and the characteristic amount $S_i$ of the consumer i acquired in step S103. Moreover, the electricity usage pattern class generation process 5011 specifies a nearest cluster k (the cluster k having the cluster center $C_k$ of which the Euclid distance from the characteristic amount $S_i$ is the smallest) for the characteristic amount $S_i$ of the consumer i and registers the consumer ID of the consumer i to a cluster consumer ID list $X_k$ corresponding to the cluster k (S105).

Subsequently, the electricity usage pattern class generation process 5011 determines whether the process of step S105 has been executed for all consumers i (S106) and returns to step S104 when a negative determination result is obtained. After that, the electricity usage pattern class generation process 5011 repeats the processes of steps S104 to S106 while sequentially switching the consumer i selected in step S104 to another non-processed consumer i. Hereinafter, a set of K cluster consumer ID lists $X_k$ corresponding to K clusters will referred to as a cluster consumer ID list set {$X_k$}.

When all consumers have been sorted to the cluster consumer ID list set {$X_k$} (step S106: YES), the electricity usage pattern class generation process 5011 calculates an average characteristic amount $S_{k\_ave}$={$\Sigma_i S_{j,1}/M$, $\Sigma_i S_{i,2}/M$, $\Sigma_i S_{i,3}/M$, ...} (where $i \in X_k$) which is the average value of the characteristic amounts of the consumer i appearing in the cluster consumer ID list $X_k$ for each cluster k and updates the average characteristic amount $S_{k\_ave}$ as a cluster center $C_k$ (S107).

After that, the electricity usage pattern class generation process 5011 determines whether the change amount in step S107 in the cluster center $C_k$ of at least one cluster in the cluster center set {$C_k$} is equal to or larger than a predetermined threshold change amount based on the cluster center set before updating in S107 and the updated cluster center set {$C_k$} (S108). Moreover, when a positive determination result is obtained, the electricity usage pattern class generation process 5011 returns to step S104 and repeats steps S104 to S108.

When the change amounts of the cluster centers $C_k$ of all clusters are smaller than the threshold (S108: YES), the electricity usage pattern class generation process 5011 stores the cluster center set {$C_k$} and the cluster consumer ID list set {$X_k$} in the memory 5002 (S109).

Subsequently, the electricity usage pattern class generation process 5011 determines whether the processes of steps S102 to S109 have been executed for all cluster numbers K (S110). When a negative determination result is obtained, the electricity usage pattern class generation process 5011 repeats the processes of steps S101 to S110 while changing the cluster number K selected in step S101 to another non-processed value (1 to M).

When the cluster center sets {$C_k$} and the cluster consumer ID list sets {$X_k$} corresponding to all cluster numbers K (1 to M) have been saved (S110: YES), the electricity usage pattern class generation process 5011 ends this clustering process.

According to the clustering process, it is possible to calculate a cluster group based on the load data stream of the consumer for respective cluster number candidates.

(5-1-2) Cluster Number Appropriateness Evaluation Value Calculation Process

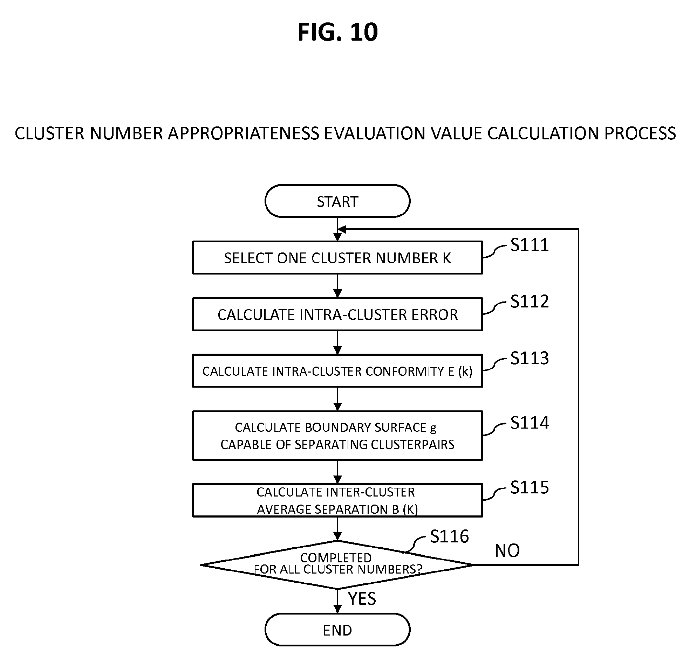

FIG. 10 illustrates a specific processing content of the cluster number appropriateness evaluation value calculation process executed in step S21 of the electricity usage pattern class generation process 5011. The cluster number appropriateness evaluation value calculation process is a process of evaluating the clustering results of the cluster numbers 1 to M calculated by the clustering process by a plurality of distance indices such as the distance between the cluster center and the characteristic amount of the load data stream or the distance between respective clusters.

First, the electricity usage pattern class generation process 5011 selects any one of the cluster numbers 1 to M (M is the number of all consumers) as the cluster number K (S111) and calculates an error (hereinafter referred to as an intra-cluster error) $E_k$ between the characteristic amount $S_i$ of the consumer i belonging to the cluster consumer ID list $X_k$ and the cluster center $C_k$ of the cluster for each cluster k when it is assumed that the cluster number K is the number selected in step S111 (S112). Specifically, the electricity usage pattern class generation process 5011 calculates the distance between the characteristic amount $S_i$ and the cluster center $C_k$ of the cluster k for each consumer i belonging to the cluster k and calculates the intra-cluster error $E_k$ by summing the distances calculated for all consumers belonging to the cluster k.

Subsequently, the electricity usage pattern class generation process 5011 calculates an intra-cluster conformity E(K) for each cluster according to Equation (1) below based on the intra-cluster error $E_k$ calculated in step S112 using a penalty coefficient a for suppressing the cluster number from becoming too large and a characteristic amount dimension count D (S113).

[Equation 1]

$$E(K) = 1/(E_K + a \times K \times D) \qquad \cdots (1)$$

The intra-cluster conformity E(K) is an index indicating the degree of orderedness of the individual load data streams in the cluster as described above, and the larger the intra-cluster conformity E(K), the more the load data streams in the cluster are in an ordered state. Moreover, in the k-means method, E(K) decreases when the cluster number K increases and becomes the smallest when K=M (the number of all consumers). Thus, the electricity usage pattern class generation process 5011 adds a penalty term a x K x D that is proportional to the number parameters used in the k-means method.

Subsequently, the electricity usage pattern class generation process 5011 calculates boundary surfaces g capable of separating clusters using a multi-class support vector machine (S114) and calculates an inter-cluster average separation B(K) according to Equation (2) below using the sum $M_K$ of the margins (distances) between clusters.

[Equation 2]

$$B(K) = M_K / {}_K C_2 \qquad \cdots (2)$$

The inter-cluster average separation B(K) is an index indicating the degree of separation between clusters as described above, and the larger the index, the more the clusters are separated. Moreover, the inter-cluster average separation may be an arbitrary index which increases as the average distance between clusters increases and may be the average value of the distances between cluster centers in each combination of two clusters.

Subsequently, the electricity usage pattern class generation process 5011 determines whether the intra-cluster conformity E(K) and the inter-cluster average separation B(K) have been calculated for all cluster numbers K (1 to M) (S116). Moreover, when a negative determination result is obtained, the electricity usage pattern class generation process 5011 repeats the processes of steps S111 to S116 while changing the cluster number K selected in step S111 to another non-processed value (1 to M).

Moreover, when the intra-cluster conformity E(K) and the inter-cluster average separation B(K) have been calculated for all cluster numbers K (1 to M) (S116: YES), the electricity usage pattern class generation process 5011 ends the cluster number appropriateness evaluation value calculation process.

According to the cluster number appropriateness evaluation value calculation process, it is possible to evaluate a cluster group of each cluster number candidate.

(5-1-3) Optimal Cluster Number Determining Process

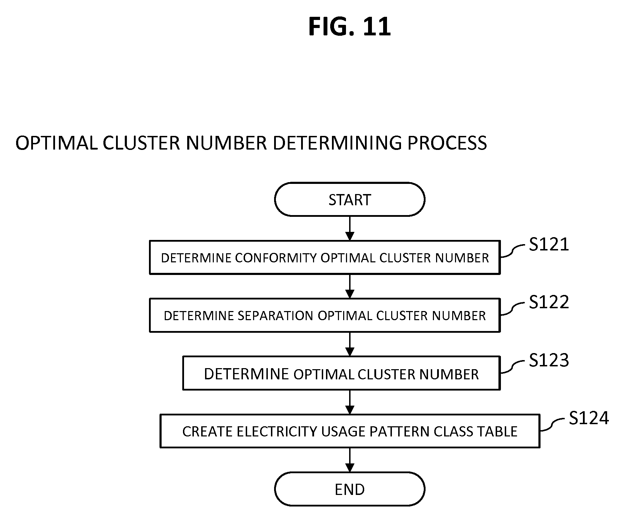

FIG. 11 illustrates a specific processing content of the optimal cluster number determining process executed in step S12 of the electricity usage pattern class generation process 5011.

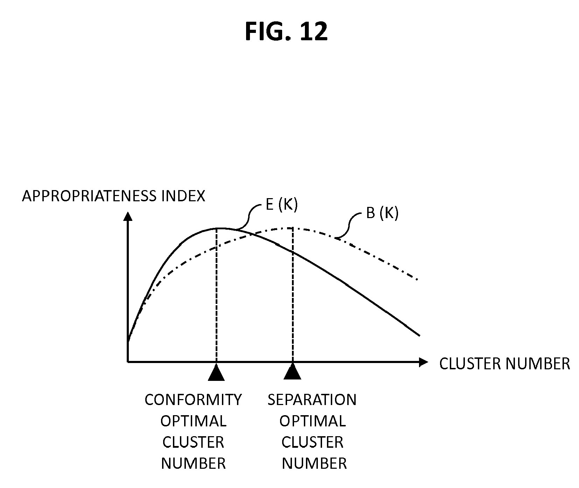

FIG. 12 illustrates a method of determining a conformity optimal cluster number and a separation optimal cluster number. In FIG. 12, the horizontal axis indicates the cluster number and the vertical axis indicates an appropriateness index. The appropriateness index includes the intra-cluster conformity $E(K)$ and the inter-cluster average separation $B(K)$. A conformity optimal cluster number CL1 is a cluster number corresponding to the largest value of the intra-cluster conformity $E(K)$. A separation optimal cluster number CL2 is a cluster number corresponding to the largest value of the inter-cluster average separation $B(K)$. The conformity optimal cluster number CL1 may be a smallest cluster number in which the ratio of a change amount of the intra-cluster conformity $E(K)$ to a change amount of the cluster number is equal to or smaller than a predetermined first threshold. The separation optimal cluster number CL2 may be a smallest cluster number in which the ratio of a change amount of the inter-cluster average separation $B(K)$ to a change amount of the cluster number is equal to or smaller than a predetermined second threshold.

First, the electricity usage pattern class generation process 5011 calculates the conformity optimal cluster number CL1 based on the relation between the cluster number K and the intra-cluster conformity $E(K)$ when it is assumed that the cluster number K calculated in the cluster number appropriateness evaluation value calculation process is 1 to M (S121).

Subsequently, the electricity usage pattern class generation process 5011 calculates the separation optimal cluster number CL2 based on the relation between the cluster number K and the inter-cluster average separation $B(K)$ when the cluster number K calculated in the cluster number appropriateness evaluation value calculation process is 1 to M (S122).

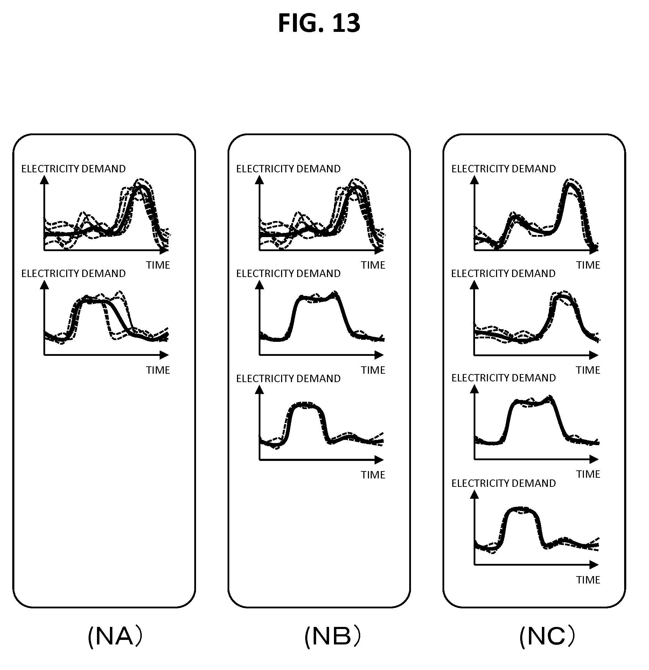

FIG. 13 illustrates the relation between the cluster number and the accuracy of the representative load data stream.

Case NA illustrated in FIG. 13 illustrates a case in which a value smaller than any one of the conformity optimal cluster number CL1 and the separation optimal cluster number CL2 is determined as the optimal cluster number. In this case, since the degree of orderedness of the load data streams (dot lines) of the individual clusters is small and the degree of separation between clusters is small, the difference between the representative load data stream (solid line) of the cluster and the load data streams of the consumers belonging to the cluster is too large.

Case NB illustrated in FIG. 13 illustrates a case in which a value larger than any one of the conformity optimal cluster number CL1 and the separation optimal cluster number CL2 is determined as the optimal cluster number. In this case, since the degree of orderedness of the load data streams (dot lines) of the individual clusters is small and the degree of separation between clusters is small, the difference between the representative load data stream (solid line) of the cluster and the load data streams of the consumers belonging to the cluster is small. Moreover, it is difficult to extract the characteristics (weekday daily use type, night use type, or specific period use type) of the electricity usage pattern class corresponding to each cluster.

In contrast, Case NC illustrated in FIG. 13 illustrates a case in which any one of the cluster numbers between the conformity optimal cluster number CL1 and the separation optimal cluster number CL2 is determined as the optimal cluster number. In this case, since the degree of orderedness of the load data streams (dot lines) of the individual clusters and the degree of separation between clusters are appropriate, the difference between the representative load data stream (solid line) of the cluster and the load data streams of the consumers belonging to the cluster is appropriate. Moreover, it is easy to extract the characteristics of the electricity usage pattern class corresponding to each cluster.

Thus, the electricity usage pattern class generation process 5011 determines one of the cluster numbers between the conformity optimal cluster number CL1 calculated in step S121 and the separation optimal cluster number CL2 calculated in step S122 as the optimal cluster number (S123).

Specifically, when at least one cluster number is present between the conformity optimal cluster number CL1 and the separation optimal cluster number CL2, the electricity usage pattern class generation process 5011 determines a cluster number closest to the central value or a cluster number selected randomly from the cluster numbers as the optimal cluster number. Moreover, when no cluster number is present between the conformity optimal cluster number CL1 and the separation optimal cluster number CL2, the electricity usage pattern class generation process 5011 determines an arbitrary one or a predetermined one of the conformity optimal cluster number CL1 and the separation optimal cluster number CL2 as the optimal cluster number.

Finally, the electricity usage pattern class generation process 5011 creates the electricity usage pattern class table 5007A (FIG. 5) indicating the electricity usage pattern classes corresponding to the optimal cluster number based on the determination result in step S123 (S124) and then ends the optimal cluster number determining process. In S124, the electricity usage pattern class generation process 5011 selects the cluster center set $\{C_k\}$ and the cluster consumer

ID list set {$X_k$} corresponding to the optimal cluster number among items of data generated by the clustering process. Moreover, the electricity usage pattern class generation process 5011 calculates the residual films by performing inverse discrete Fourier transform on the cluster center $C_k$ for each cluster k. The representative load data stream may be a load data stream having a form appearing most frequently in the cluster or a load data stream corresponding to a specific number in the cluster instead of the result of the inverse discrete Fourier transform on the cluster center $C_k$. Moreover, the electricity usage pattern class generation process 5011 creates an electricity usage pattern class using k which is the electricity usage pattern class ID, the representative load data stream, and the cluster consumer ID list $X_k$ and registers the electricity usage pattern class to the electricity usage pattern class table 5007A. Further, the electricity usage pattern class generation process 5011 transmits information indicating the created electricity usage pattern class, such as the optimal cluster number, the representative load curve indicated by the representative load data stream of a specific cluster, the cluster consumer ID list, and the number of consumers in the cluster consumer ID list to the information input/output terminal 52 so that the information is displayed on the information input/output terminal 52. In this way, the retail operator 5 can check the optimal cluster number and the characteristics of the specific cluster. The information input/output terminal 52 transmits an induction target classification of the electricity usage pattern class, input by an administrator of the retail operator 5 according to the display to the total income calculator 50. Upon receiving the induction target classification, the electricity usage pattern class generation process 5011 registers the induction target classification to the electricity usage pattern class table 5007A. The electricity usage pattern class generation process 5011 may evaluate the cluster center or the representative load data stream by predetermined evaluation criteria and determine the induction target classification according to the evaluation result.

According to this process, the electricity usage pattern class generation process 5011 can determine the optimal cluster number and a cluster group corresponding to the optimal cluster number and a representative load data stream group corresponding to each of the cluster group. In this way, the electricity usage pattern class generation process 5011 can create an electricity usage pattern class corresponding to the optimal cluster number and associate each consumer with any one of the optimal cluster number and the electricity usage pattern class.

(5-2) Consumer Class Customization Process

The consumer class customization process 5012 is a process of correcting the consumer class registered in advance by the retail operator 5 based on the electricity usage pattern class generated by the electricity usage pattern class generation process 5011.

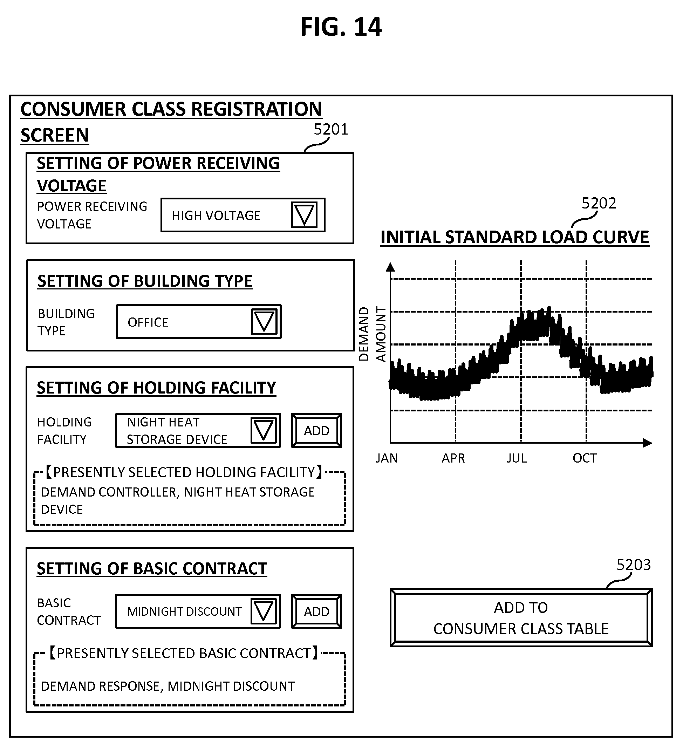

The consumer class customization process 5012 displays a consumer class registration screen illustrated in FIG. 14 on the information input/output terminal 52 in advance and executes a consumer class registration process. In the consumer class registration screen, the retail operator 5 designates attribute information 5201 (a power receiving voltage, a building type, a holding facility, and a basic contract), inputs by rendering an initial standard load curve 5202 which is an initial value of the standard load curve in correspondence to the designated attribute information, and inputs a consumer class by clicking on an add button 5203. For example, in FIG. 14, as the attribute information 5201, the power receiving voltage is set to "high voltage," the building type is set to "office," the holding facility is set to "demand controller" and "night heat storage device," and the basic contract is set to "demand response" and "night-time discount," and the initial standard load curve 5202 corresponding to the attribute information is input.

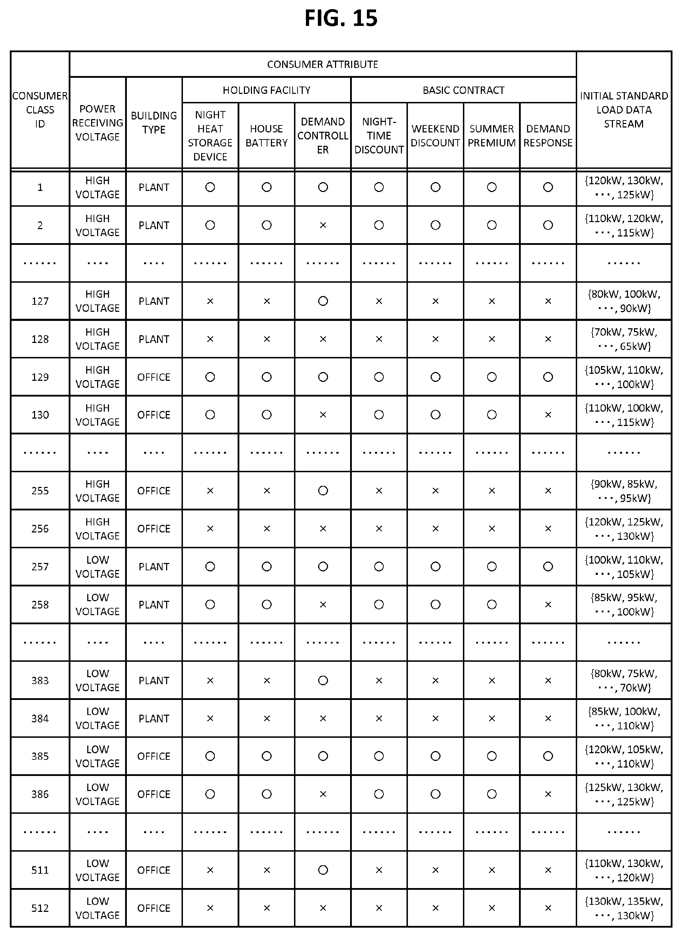

Moreover, FIG. 15 illustrates 512 consumer classes generated for all combinations of the items of attribute information. In this example, 512 (=2 x 2 x $2^3$ x $2^4$) consumer classes in total are generated according to the setting items regarding whether the power receiving voltage is "high voltage" or "low voltage," the building type is "plant" or "office," a customer has "night heat storage device," "house battery," and "demand controller" as the holding facility, and the consumer has signed on "midnight discount," "weekend discount," "summer discount," and "demand response" as the basic contract. The consumer class customization process 5012 acquires the attribute information 5201 designated by the retail operator 5 and the initial standard load curve 5202 input in correspondence to the designated attribute information according to clicking on of the add button 5203, acquires an initial standard load data stream which is an initial value of the standard load data stream based on the initial standard load curve 5202, and stores the consumer class including the attribute information 5201 and the initial standard load data stream in the consumer class table 5008A illustrated in FIG. 6. The consumer class customization process 5012 automatically allocates the consumer class ID which is the identification number of the consumer class so as not to overlap other consumer class. The holding facility may be an electricity and heat cogeneration facility (cogeneration), a gas heat pump air-conditioner (GHP), and a photovoltaic power generator. Moreover, the number of holding facilities is not limited to the three holding facilities illustrated in the present embodiment.

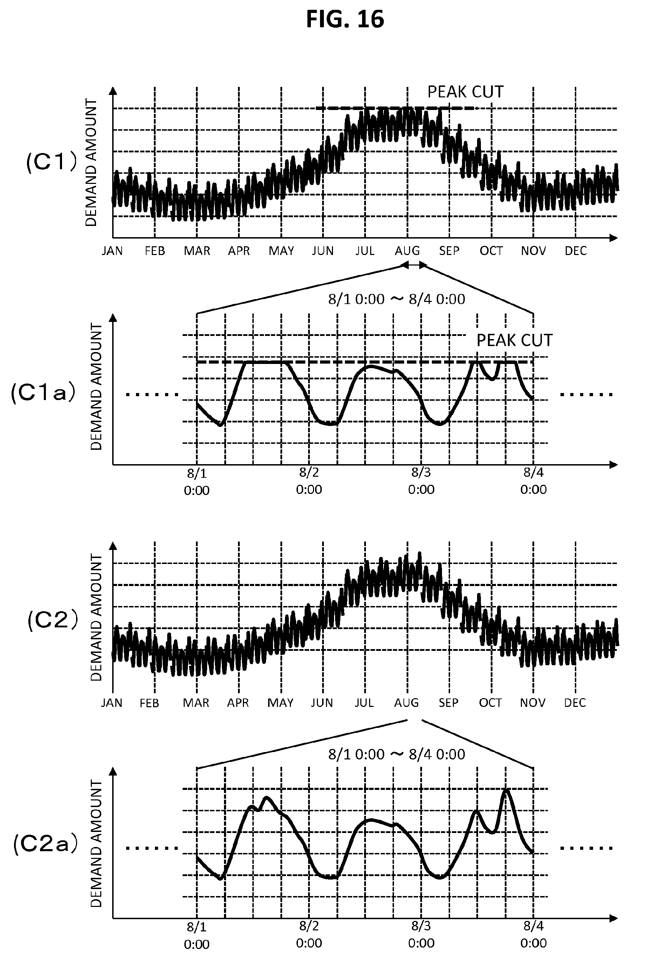

FIG. 16 illustrates initial standard load curves of the consumer classes corresponding to "consumer class ID=1" and "consumer class ID=2" illustrated in FIG. 15. An initial standard load curve C1 in FIG. 16 illustrates an annual initial standard load curve of the consumer class corresponding to "consumer class ID=1" that possesses a demand controller. An initial standard load curve C1a in FIG. 16 illustrates the initial standard load curve C1 corresponding to three days in the summer season at an enlarged scale. Moreover, an initial standard load curve C2 in FIG. 16 illustrates an annual initial standard load curve of the consumer class corresponding to "consumer class ID=2" that does not possess a demand controller. An initial standard load curve C2a in FIG. 16 illustrates the initial standard load curve C2 corresponding to three days in the summer season at an enlarged scale. As illustrated in the drawing, the shape of the initial standard load curve is different depending on a difference (in this example, the presence of the demand controller) in the attribute information designated by the retail operator 5.

The consumer class customization process 5012 may generate the initial standard load curve of another consumer class based on the initial standard load curve of a consumer class input by the retail operator.

For example, in the example of FIG. 16, when the initial standard load curve C2 of the consumer class corresponding to "consumer class ID=2" that does not possess the demand controller is input, the consumer class customization process 5012 generates the initial standard load curve C1 of the consumer class corresponding to "consumer class ID=1" that possesses the demand controller based on the initial standard load curve C2. Here, the consumer class customization process 5012 generates the initial standard load curve C1 by decreasing the demand amount in the initial standard load curve C2 in a period in which the demand amount exceeds a predetermined threshold demand amount up to the threshold demand amount and adding the decrement to the initial standard load curve C2 after that period.

Moreover, for example, when a first initial standard load curve of the consumer class that possesses a night heat storage device, the consumer class customization process 5012 generates a second initial standard load curve of the consumer class that does not possess the night heat storage device based on the first initial standard load curve. Here, the consumer class customization process 5012 generates the second initial standard load curve by increasing the demand amount in the night time, of the first initial standard load curve and decreasing the increment from the demand amount in the morning of the next day.

Moreover, for example, when a first initial standard load curve of the consumer class of which the basic contract is not the night-time discount, the consumer class customization process 5012 generates a second initial standard load curve of the consumer class of which the basic contract is the night-time discount based on the first initial standard load curve. Here, the consumer class customization process 5012 generates the second initial standard load curve by increasing the demand amount in the night time of the first initial standard load curve and decreasing the demand amount in the day time.

Moreover, for example, when a first initial standard load curve of the consumer class of which the basic contract is not the weekend discount, the consumer class customization process 5012 generates a second initial standard load curve of the consumer class of which the basic contract is the week end based on the first initial standard load curve. Here, the consumer class customization process 5012 generates the second initial standard load curve by increasing the demand amount in the weekend of the first initial standard load curve and decreasing the demand amount in the weekdays.

Moreover, for example, when a first initial standard load curve of the consumer class of which the basic contract is not the summer premium, the consumer class customization process 5012 generates a second initial standard load curve of the consumer class of which the basic contract is the summer premium based on the first initial standard load curve. Here, the consumer class customization process 5012 generates the second initial standard load curve by decreasing the demand amount in the summer season of the first initial standard load curve and increasing the demand amount in other seasons other than the summer.

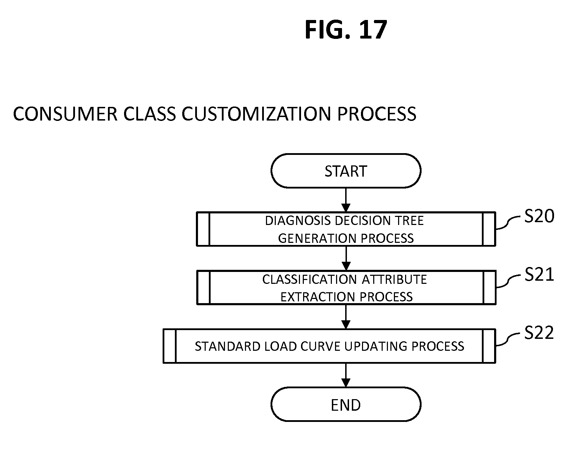

An example of the consumer class customization process 5012 will be described with reference to the flowchart of FIG. 17.

First, in step S20, the consumer class customization process 5012 generates a diagnosis decision tree for discovering an attribute for appropriately classifying a consumer (hereinbelow, an induction target consumer) who is the target of induction of the electricity usage pattern class and a consumer (hereinbelow, a non-induction target consumer) who is not the target of induction of the electricity usage pattern class. Subsequently, in step S21, the consumer class customization process 5012 extracts an attribute capable of appropriately classifying a consumer (a consumer who contributes to increasing the profit of the retail operator 5) who is the target of induction of the electricity usage pattern class and a consumer (a consumer who does not contribute to increasing the profit of the retail operator 5) who is not the target of induction of the electricity usage pattern class using the diagnosis decision tree generated in step S20. Finally, in step S22, the consumer class customization process 5012 updates the standard load data stream of each consumer class based on the representative load data stream of the electricity usage pattern class belonging to each consumer class.

With the above-described processes, the consumer class customization process 5012 can discover an attribute for appropriately classifying an induction target consumer and a non-induction target consumer and correct the standard load data stream of each of the consumer classes designated in advance based on the consumer attribute data according to the actual market demand.

(5-2-1) Diagnosis Decision Tree Generation Process

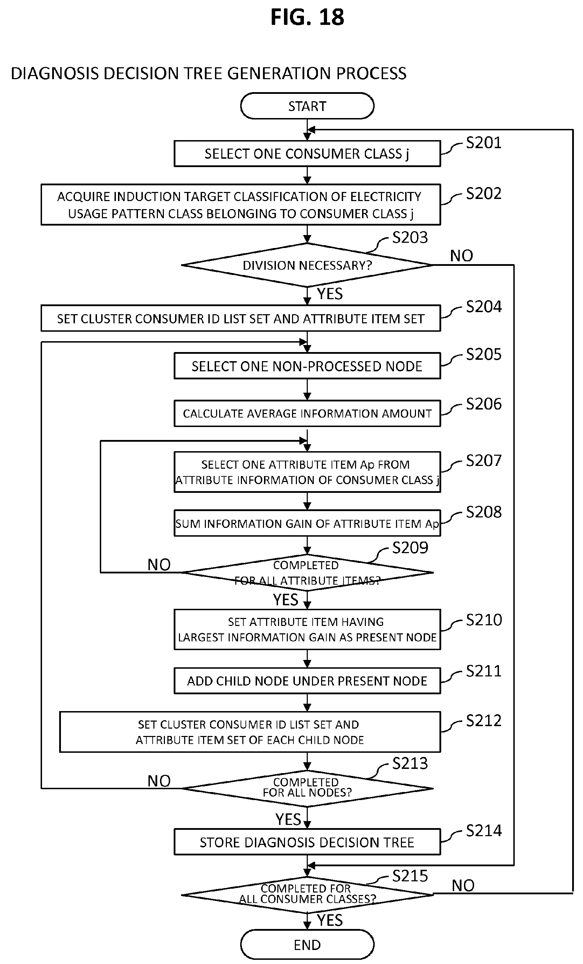

FIG. 18 illustrates a specific processing content of the diagnosis decision tree generation process executed in step S20 of the consumer class customization process 5012.

First, the consumer class customization process 5012 selects one consumer class j from the consumer class table 5008A (S201). Subsequently, the consumer class customization process 5012 acquires an induction target classification of each electricity usage pattern class including in "electricity usage pattern class ID list" by referring to the "electricity usage pattern class ID list" of the consumer class j selected in step S201 (S202).

Subsequently, it is determined whether it is necessary to divide the consumer class j based on the induction target classification of each electricity usage pattern class acquired in step S202 (S203). Here, when an electricity usage pattern class of which the induction target classification is "induction target" and an electricity usage pattern class of which the induction target classification is "non-induction target" are mixed in the consumer class j, the consumer class customization process 5012 determines that "division necessary." When an electricity usage pattern class of which the induction target classification is "induction target" only is present in the consumer class j or when an electricity usage pattern class of which the induction target classification is "non-induction target" only is present in the consumer class j, the consumer class customization process 5012 determines that "division not necessary." When "division necessary" is obtained, the flow proceeds to step S204 described later. When "division not necessary" is obtained, the flow proceeds to step S215.

Subsequently, the consumer class customization process 5012 specifies an electricity usage pattern class appearing in the electricity usage pattern class ID list of the consumer class j, acquires the cluster consumer ID list of the specified electricity usage pattern class as a cluster consumer ID list set $\{X_k\}$, and acquires a set of attribute items included in the attribute information of the consumer class j as an attribute item set $\{A_p\}$ (S204). Moreover, the consumer class customization process 5012 selects the root (the highest node) of a diagnosis decision tree to be generated as a present node (S205).

Subsequently, the consumer class customization process 5012 calculates an average information amount $H(\{X_k\})$ of the clusters of the consumers included in the cluster consumer ID list set $\{X_k\}$ according to Equation (3) below (S206).

[Equation 3]

$$H(\{X_k\}) = -\sum_k (|X_k| / \sum_n |X_n|) \log(|X_k| / \sum_n |X_n|) \quad \cdots \ (3)$$

Here, n is a set of all electricity usage pattern class IDs, and k is a set of electricity usage pattern class IDs appearing in the electricity usage pattern class ID list of the consumer class j. Moreover, $|X_k|$ is the number of consumers included in the cluster k.

The wider (the larger the cluster number) the spread of the clusters to which the consumers of the consumer class j belong, the larger the average information amount $H(\{X_k\})$. Moreover, the narrower (the smaller the cluster number) of the spread of the clusters to which the consumers of the consumer class j belong, the smaller the average information amount $H(\{X_k\})$. When all consumers of the consumer class j belong to one cluster only, the average information amount has the smallest value 0.

Subsequently, the consumer class customization process 5012 selects one attribute item $A_p$ from the attribute item set $\{A_p\}$ of the consumer class j and selects one attribute value $a_{p,q}$ among attribute values $a_{p,1}$, $a_{p,2}$, $a_{p,3}$, ... that the selected attribute item $A_p$ can take. Here, p indicates the index of an attribute item and q indicates the index of an attribute value. Moreover, $a_{p,q}$ may indicate the range and the condition of an attribute value. For example, when the attribute item $A_1$ indicates "power receiving voltage," the attribute value $a_{1,1}$ indicates "high voltage" and $a_{1,2}$ indicates "low voltage." Moreover, the consumer class customization process 5012 specifies consumers having the attribute value $a_{p,q}$ within the cluster consumer ID list set $\{X_k\}$ of the consumer class j, creates a partial consumer ID list set $\{Y_{k,q}\}$ limited to the consumer IDs of the specified consumers, calculates the number of consumers $|Y_{k,q}|$ included in the partial consumer ID list set $\{Y_{k,q}\}$, and calculates an information gain (information gain ratio) IG $(A_p)$ to the selected attribute item $A_p$ according to Equation (4) below (S208).

[Equation 4]

$$IG(A_p) = H(\{X_k\}) - \sum_q \sum_k (|Y_{k,q}| / \sum_n |Y_{n,q}|) \log((|Y_{k,q}| / \sum_n |Y_{n,q}|)$$

$$\cdots \quad (4)$$

The information gain IG ($A_p$) is a parameter indicating how much the spread of the clusters to which the consumers included in the cluster consumer ID list set belong is decreased when the partial consumer ID list $\{Y_{k,q}\}$ was excluded from the cluster consumer ID list set $\{X_k\}$.

Subsequently, the consumer class customization process 5012 determines whether the information gain IG ($A_p$) has been calculated for all attribute items $A_p$ (S209) and returns to step S207 when a negative determination result is obtained. After that, the consumer class customization process 5012 repeats the processes of steps S207 to S209.

When the information gain IG ($A_p$) has been calculated for all attribute items $A_p$ and a positive determination result is obtained in step S209, the consumer class customization process 5012 sets an attribute item $A_p^*$ corresponding to the largest value of the information gain IG ($A_p$) obtained by the above-described process as a present node of the diagnosis decision tree (S210) and creates child nodes for the respective attribute values $a_{p,1}^*$, $a_{p,2}^*$, $a_{p,3}^*$, ... of the attribute item $A_p^*$ (step S211).

Subsequently, the consumer class customization process 5012 records the partial consumer ID list $\{Y_{k,q}\}$ corresponding to each attribute value $a_{p,q}^*$ of the above-described attribute item $A_p^*$ as a new cluster consumer ID list set $\{X_k\}$ for the child node corresponding to the attribute value $a_{p,q}^*$. Moreover, the consumer class customization process 5012 records a partial set $\{A_p \backslash A_p^*\}$ obtained by excluding the attribute item $A_p^*$ corresponding to the largest value of the information gain IG ($A_p$) from the attribute item set $\{A_p\}$ as a new attribute item set $\{A_p\}$ for the respective child nodes (S212).

Subsequently, the consumer class customization process 5012 determines whether the processes of steps S206 to S212 have been executed for all nodes (S213) and repeats the processes of steps S205 to S213 while sequentially switching the node selected in step S205 to another non-processed node when a negative determination result is obtained.

When the corresponding attribute item $A_p^*$ is determined for all nodes and a positive determination result is obtained in step S213, the consumer class customization process 5012 stores the diagnosis decision tree corresponding to the consumer class j in the memory 5002 (S214).

Subsequently, the consumer class customization process 5012 determines whether the processes of steps S202 to S213 have been executed for all consumer classes j (S215) and returns to step S201 when a negative determination result is obtained. After that, the consumer class customization process 5012 repeats the processes of steps S201 to S215 while sequentially switching the consumer class j selected in step S201 to another non-processed consumer class j.

When the diagnosis decision tree has been generated for all consumer classes j and a positive determination result is obtained in step S215, the consumer class customization process 5012 ends the diagnosis decision tree generation process.

According to this process, the retail operator 5 can generate a diagnosis decision tree for dividing the consumer class into an induction target electricity usage pattern class and a non-induction target electricity usage pattern class.

(5-2-2) Classification Attribute Extraction Process

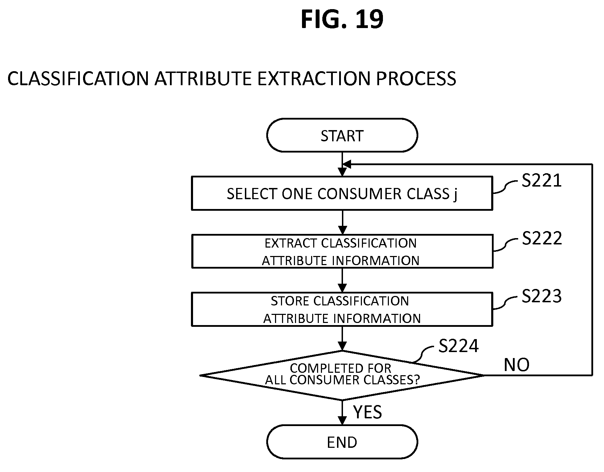

FIG. 19 illustrates a specific processing content of the classification attribute extraction process executed in step S21 of the consumer class customization process 5012.

First, the consumer class customization process 5012 selects one consumer class j from the consumer class table 5008A (S221). Subsequently, the consumer class customization process 5012 extracts classification attribute information for classifying an induction target electricity usage pattern class and a non-induction target electricity usage pattern class included in the consumer class j based on the diagnosis decision tree of the consumer class j generated by the diagnosis decision tree generation process (S222).

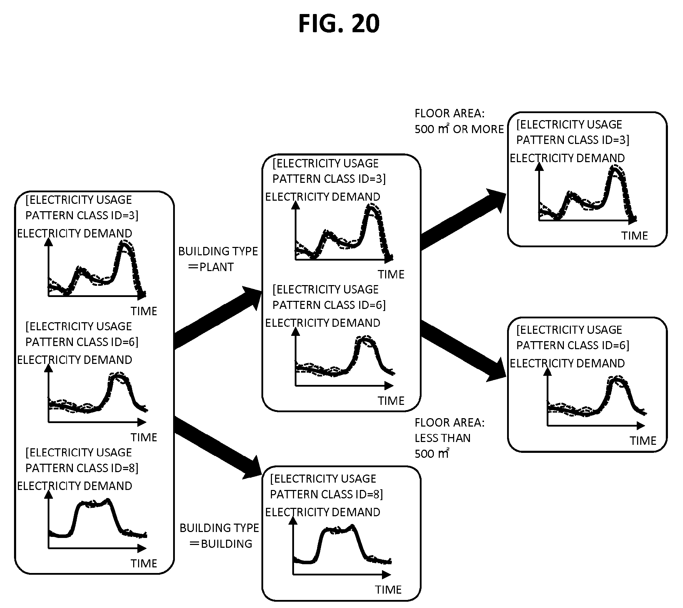

For example, in the diagnosis decision tree of FIG. 20, when "electricity usage pattern class ID=6" is an electricity usage pattern class of "induction target" and "electricity usage pattern class ID=3" and "electricity usage pattern class ID=8" are electricity usage pattern classes of "non-induction target," the consumer class customization process 5012 extracts an attribute item and an attribute value of "building type: plant" and "floor area: less than 500 m$^2$" as the classification attribute information for extracting the induction target electricity usage pattern class (electricity usage pattern class ID=6) only.

Subsequently, the consumer class customization process 5012 stores the classification attribute information for the consumer class j in the memory 5002 (S223).

Finally, the consumer class customization process 5012 determines whether the processes of steps S222 to S223 have been executed for all consumer classes j (S224) and returns to step S221 when a negative determination result is obtained. After that, the consumer class customization process 5012 repeats the processes of steps S221 to S224 while sequentially switching the consumer class j selected in step S221 to another non-processed consumer class j.

Moreover, when the classification attribute information has been extracted for all consumer classes j and a positive determination result is obtained in step S224, the consumer class customization process 5012 ends the classification attribute extraction process.

According to this process, the retail operator 5 can extract the attribute information for dividing the consumer class into an induction target electricity usage pattern class table and a non-induction target electricity usage pattern class.

(5-2-3) Standard Load Curve Updating Process

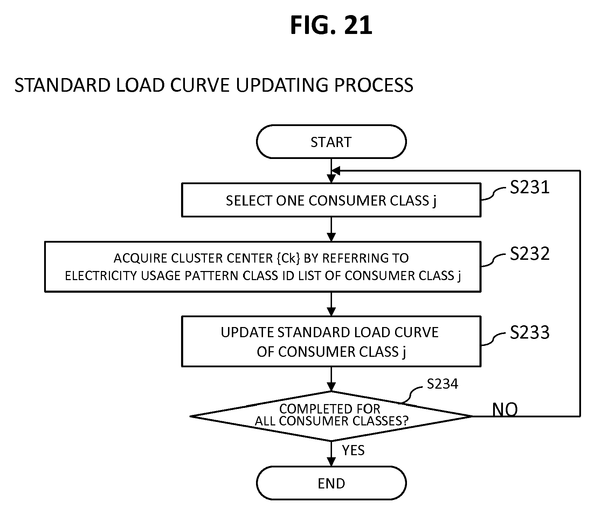

FIG. 21 illustrates a specific processing content of the standard load curve updating process executed in step S22 of the consumer class customization process 5012.

First, the consumer class customization process 5012 selects one consumer class j from the consumer class table 5008A (S231). Subsequently, the consumer class customization process 5012 acquires a representative load data stream of each electricity usage pattern class included in "electricity usage pattern class ID list" by referring to the "electricity usage pattern class ID list" of the consumer class j (S232).

Subsequently, the consumer class customization process 5012 calculates a standard load data stream of the consumer class j by averaging the representative load data stream of each electricity usage pattern class acquired in step S232 and updates the standard load data stream of the consumer class table 5008A (S233).

Subsequently, the consumer class customization process 5012 determines whether the processes of steps S231 to S233 have been executed for all consumer classes j (S234) and returns to step S231 when a negative determination result is obtained. After that, the consumer class customization process 5012 repeats the processes of steps S231 to S234 while sequentially switching the consumer class j selected in step S231 to another non-processed consumer class j.

When the sample consumer ID list has been updated for all consumer classes j and a positive determination result is obtained in step S234, the consumer class customization process 5012 ends the standard load curve updating process.

According to this process, the consumer class customization process 5012 can customize the standard load data stream of the consumer class to the actual situation by calculating the standard load data stream using the representative load data stream of the electricity usage pattern class associated with the consumer class.

(5-3) Subscription Condition Adding Process

The subscription condition adding process 5015 is a process of adding a new subscription condition to the subscription condition of the rate menu class such that a consumer of which the induction target classification of the electricity usage pattern class is "induction target" only can subscribe to the rate menu class.

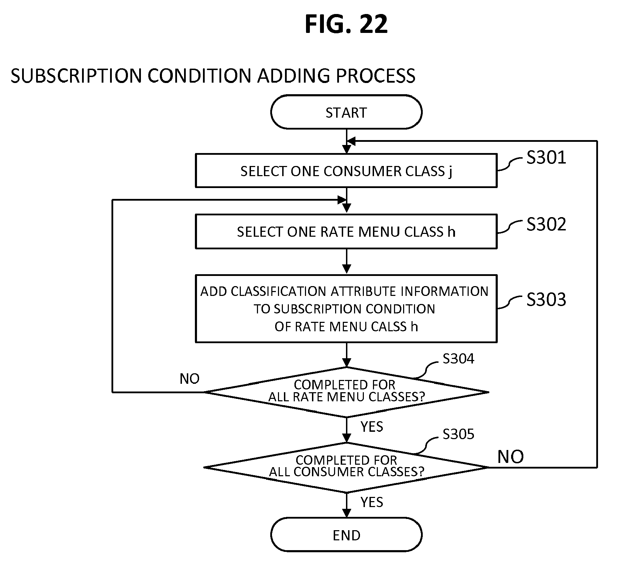

An example of this process will be described with reference to the flowchart of FIG. 22.

First, the subscription condition adding process 5015 selects one consumer class j from the consumer class table 5008A (S301). Subsequently, the subscription condition adding process 5015 selects one rate menu class h from "subscribable rate menu class ID list" by referring to the "subscribable rate menu class ID list" of the consumer class j (S302). Subsequently, the subscription condition adding process 5015 adds an attribute item and an attribute value appearing in the classification attribute information of the consumer class j extracted by the classification attribute extraction process to the subscription condition of the rate menu class h (S303). For example, when the classification attribute information of the consumer class j is "building type: plant" and "floor area: less than 500 $m^2$," the subscription condition adding process 5015 adds "building type" and "floor area" to the subscription condition items of the rate menu class h of the rate menu class table 5008A and adds "plant" and "less than 500 $m^2$" as the values corresponding to the subscription condition items.

Subsequently, the subscription condition adding process 5015 determines whether the process of step S303 has been executed for all rate menu classes h (S304) and returns to step S302 when a negative determination result is obtained. After that, the subscription condition adding process 5015 repeats the processes of steps S302 to S304 while sequentially switching the rate menu class h selected in step S302 to another non-processed rate menu class h.

When the classification attribute information has been added for all rate menu classes h and a positive determination result is obtained in step S304, the subscription condition adding process 5015 determines whether the processes of steps S302 to S304 have been executed for all consumer classes j (S305) and returns to step S301 when a negative determination result is obtained. After that, the subscription condition adding process 5015 repeats the processes of steps S301 to S305 while sequentially switching the consumer class j selected in step S301 to another non-processed consumer class j.

When the classification attribute information has been added for all consumer classes j and a positive determination result is obtained in step S305, the subscription condition adding process 5015 ends the subscription condition adding process.

According to this process, the retail operator 5 can induce consumers belonging to an induction target electricity usage pattern class to a specific rate menu class by adding a subscription condition for the consumers belonging to the induction target electricity usage pattern class to the specific rate menu class among the consumer class including the consumers belonging to the induction target electricity usage pattern class and the consumers belonging to the non-induction target electricity usage pattern class.

(5-4) Consumer Response Model Creation Process

The consumer response model creation process 5013 is a process of creating a consumer response model for estimating a response of a consumer to revision of a rate menu.

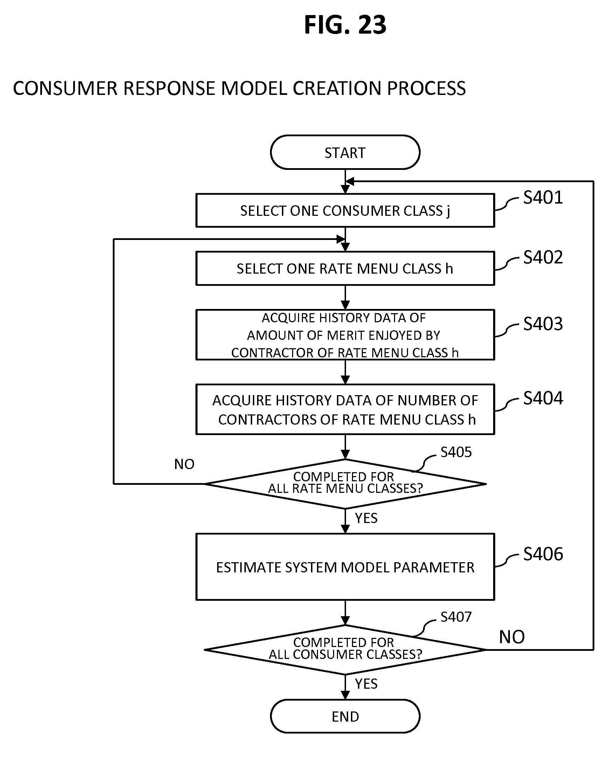

An example of this process will be described with reference to the flowchart of FIG. 23.

First, the consumer response model creation process 5013 selects one consumer class j from the consumer class table 5008A (S401). Subsequently, the consumer response model creation process 5013 selects one rate menu class h from "subscribable rate menu class ID list" by referring to the "subscribable rate menu class ID list" of the consumer class j (S402). Subsequently, the consumer response model creation process 5013 acquires a history data $X_{j,h}(t)$ of the amount of merit that a consumer belonging to the consumer class j enjoys by signing on the rate menu of the rate menu class h from the customer charge manager 53 (S403). Here, the amount of merit is a discount rate of an electricity rate, for example.

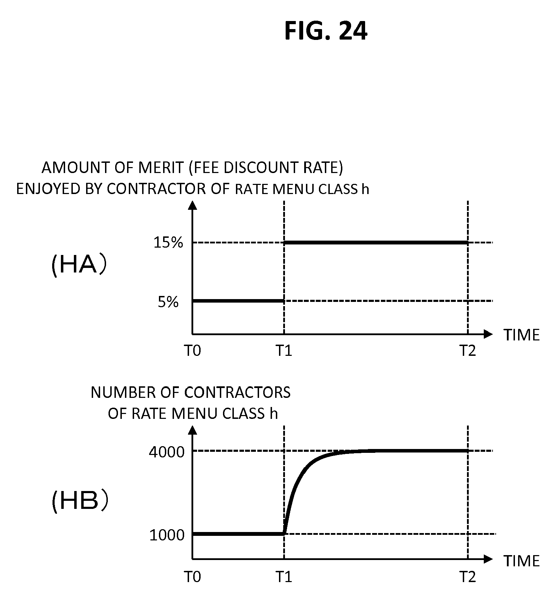

FIG. 24 illustrates a change over time in the amount of merit and the number of contractors of the rate menu class. As an example, HA illustrating the change over time in the amount of merit illustrates the history data of the discount rate from time T0 to T2 of the rate menu class h, and the discount rate is 5% from time T0 to T1 and the discount rate changes to 15% from time T1 to T2.

Subsequently, the consumer response model creation process 5013 acquires history data $Y_{j,h}(t)$ of the number of contractors who have signed on the rate menu class h among the consumers belonging to the consumer class j from the customer charge manager 53 (S404). As an example, HB illustrating the change over time in the number of contractors illustrates the history data of the number of contractors from time T0 to T2, and the number of contractors is 1000 from time T0 to T1 and the number of contractors increases from 1000 to 4000 from time T1 to T2 in which the amount of merit increases.

Subsequently, the consumer response model creation process 5013 determines whether the processes of steps S403 to S404 have been executed for all rate menu classes h included in the subscribable rate menu class list of the consumer class j (S405) and returns to step S402 when a negative determination result is obtained. After that, the consumer response model creation process 5013 repeats the processes of steps S402 to S405 while sequentially switching the rate menu class h selected in step S402 to another non-processed rate menu class h.

Moreover, when the history data $X_{j,h}(t)$ of the amount of merit and the history data $Y_{j,h}(t)$ of the number of contractors have been acquired for all rate menu classes that consumers belonging to the consumer class j can subscribe to (S405: YES), the consumer response model creation process 5013 estimates parameters T and K of (identifies) a system model represented by Equation (5) below using the acquired history data $X_{j,h}(t)$ of the amount of merit and the acquired history data $Y_{j,h}(t)$ of the number of contractors (S406).

[Equation 5]

$$T\frac{dY_j(t)}{dt} + Y_j(t) = KX_j(t) \qquad \cdots (5)$$

Here, Equation (5) indicates a system model of a primary delay system, T is a time constant, and K is a gain. The system model receives the amount of merit as its input and outputs the number of contractors. The consumer response model creation process 5013 estimates the parameters T and K with respect to the history data of the amount of merit and the history data of the number of contractors so that the output error of the system model is minimized. Although the system model represented by Equation (5) is a model of a primary delay system, a model of a secondary delay system and a time-series model such as an ARX model or an ARMAX model may be used. The parameters of the system model can be estimated using the least-squares method.

Subsequently, the consumer response model creation process 5013 determines whether the processes of steps S402 to S406 have been executed for all consumer classes j (S407) and returns to step S401 when a negative determination result is obtained. After that, the consumer response model creation process 5013 repeats the processes of steps S401 to S407 while sequentially switching the consumer class j selected in step S401 to another non-processed consumer class j.

When the parameters of the system model have been estimated for all consumer classes (S407: YES), the consumer response model creation process 5013 ends the consumer response model creation process.

(5-5) Consumer Response Estimation Process

The consumer response estimation process 5014 is a process of estimating the response (number of responded contractors) of a consumer to revision of the rate menu using the consumer response model of each consumer class, created by the consumer response model creation process 5013.

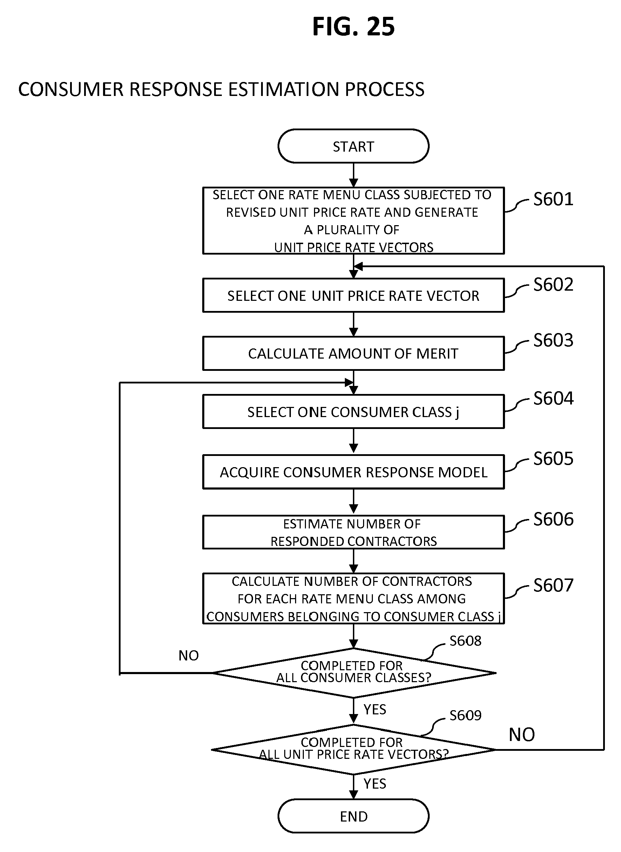

An example of this process will be described with reference to the flowchart of FIG. 25.

First, the consumer response estimation process 5014 selects one rate menu class of which the unit price rate is to be revised from the rate menu class table 5009A and generates a plurality of unit price rate vectors (unit price rate candidates) $P_m(=[p_{m,1}, p_{m,2}, ..., p_{m,t}])$ of which the elements are the unit price rates of the selected rate menu class (S601). Here, m is a unit price rate vector number for identifying the unit price rate vector. Here, $p_{m,1}, p_{m,2}, ..., p_{m,t}$ indicate the unit price rates in respective time periods. For example, when the unit of the time period is one hour and a rate menu class of the rate menu class ID=1 illustrated in FIG. 7 is selected as a rate menu class of which the unit price rate is to be revised, the consumer response estimation process 5014 can generate unit price rate vectors in which $p_{m,1}$, $p_{m,2}$, ..., and $p_{m,8}$ are "12 yen/kWh" and $p_{m,9}, p_{m,10}, ...,$ and $p_{m,24}$ are "19 yen/kWh" according to the present unit price rates. Moreover, when $p_{m,1}, p_{m,2}, ...,$ and $p_{m,8}$ are changed to "11 yen/kWh," "10 yen/kWh," ... and $p_{m,9}, p_{m,10}, ...,$ and $p_{m,24}$ are changed to "18 yen/kWh," "17 yen/kWh," ... as the candidates for the revised unit price rate, it is possible to generate a plurality of unit price rate vectors of which the elements are the revised unit price rate candidates. In the present embodiment, the consumer response estimation process 5014 generates a plurality of unit price rate vectors by continuously changing the respective elements of the unit price rate vector according to the predetermined upper and lower limits and the pitch width of the unit price rates.

Subsequently, the consumer response estimation process 5014 selects one unit price rate vector from the unit price rate vectors generated in step S601 (S602). Subsequently, the consumer response estimation process 5014 calculates the amount of merit that the consumer 7 enjoys using the unit price rate vector selected in step S602 (S603). For example, the consumer response estimation process 5014 calculates the discount rate from a reference value of the predetermined unit price rate as the amount of merit.

Subsequently, the consumer response estimation process 5014 selects one consumer class j from the consumer class table 5008A (S604) and acquires a consumer response model of the consumer class j estimated by the consumer response model creation process 5013 (S605).

Subsequently, the consumer response estimation process 5014 estimates the number of responded contractors $Y_j(t)$ of the consumer class j by inputting the amount of merit $X_j(t)$ calculated in step S603 to the consumer response model of the consumer class j acquired in step S605 (S606). Subsequently, the consumer response estimation process 5014 calculates the number of contractors of reach rate menu class among the consumers belonging to the consumer class j using the number of responded contractors estimated in step S606 (S607).

Subsequently, the consumer response estimation process 5014 determines whether the processes of steps S605 to S607 have been executed for all consumer classes (S608) and returns to step S604 when a negative determination result is obtained. After that, the consumer response estimation process 5014 repeats the processes of steps S604 to S608 while sequentially changing the consumer class selected in step S604 to another non-processed consumer class.

When the number of responded contractors have been calculated for all consumer classes (S608: YES), the consumer response estimation process 5014 determines whether the processes of steps S603 to S608 have been executed for all unit price rate vectors (S609), the consumer response estimation process 5014 returns to step S602 when a negative determination result is obtained. After that, the consumer response estimation process 5014 repeats the processes of steps S602 to S609 while sequentially switching the unit price rate vector selected in step S602 to another non-processed unit price rate vector.

When the number of responded contractors has been calculated for all unit price rate vectors (S609: YES), the consumer response estimation process 5014 ends the consumer response estimation process.

According to this process, the retail operator 5 can calculate the total income by taking the change in the number of contractors resulting from a change in a specific rate menu class into consideration.

(5-6) Sales Income Calculation Process

The sales income calculation process 5016 is a process of calculating the sales income of the retail operator 5 for each unit price rate vector generated by the consumer response estimation process 5014.

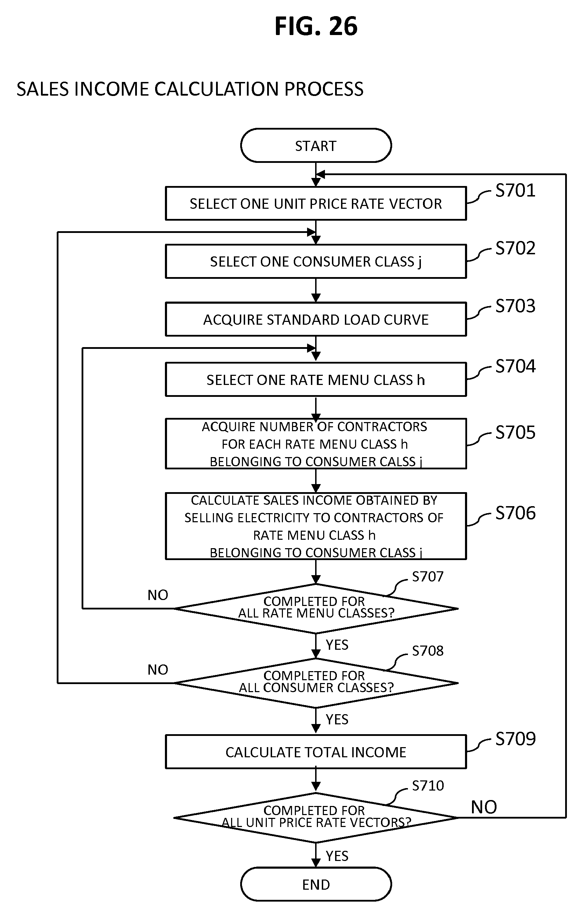

An example of this process will be described with reference to the flowchart of FIG. 26.

First, the sales income calculation process 5016 selects one unit price rate vector among the plurality of unit price rate vectors generated by the consumer response estimation process 5014 (S701).

Subsequently, the sales income calculation process 5016 selects one consumer class j from the consumer class table 5008A (S702) and acquires the standard load data stream of the consumer class j (S703). Subsequently, the sales income calculation process 5016 selects one rate menu class h from the rate menu class table 5009A (S704) and acquires the number of contractors of the rate menu class h of the consumers belonging to the consumer class j calculated by the consumer response estimation process 5014 (S705). Subsequently, the sales income calculation process 5016 multiplies the amount of electricity usage appearing in the standard load data stream of the consumer class j acquired in step S703 and the unit price rate of the rate menu class h in respective time periods to obtain the sum thereof and multiplies the number of contractors acquired in step S705 with the sum to thereby calculate the sales income $I_{j,h}$ of the retail operator 5 obtainable by selling electricity to the contractors of the rate menu class h, belonging to the consumer class j (S706).

The sales income calculation process 5016 may acquire the representative load data stream of a plurality of electricity usage pattern classes included in the electricity usage pattern class ID list of the consumer class j instead of step S703 and may calculate the sales income for each representative load data stream using the amount of electricity usage appearing in each of the acquired residual films and obtain the average as the sales income $I_{j,h}$ instead of step S706.

Subsequently, the sales income calculation process 5016 determines whether the processes of steps S705 to S706 have been executed for all rate menu classes h (S707) and returns to step S704 when a negative determination result is obtained. After that, the sales income calculation process 5016 repeats the processes of steps S705 to S706 while sequentially switching the rate menu class h selected in step S704 to another non-processed rate menu class h.

When the sales income has been calculated for all rate menu classes (S707: YES), the sales income calculation process 5016 determines whether the processes of steps S703 to S707 have been executed for all consumer classes j (S708) and returns to step S702 when a negative determination result is obtained. After that, the sales income calculation process 5016 repeats the processes of steps S702 to S708 while sequentially switching the consumer class j selected in step S702 to another non-processed consumer class j.

When the sales income has been calculated for all consumer classes (S708: YES), the sales income calculation process 5016 calculates the total income $I^{all}$ according to Equation (6) below (S709).

[Equation 6]

$$I^{all} = \sum_{j}\sum_{h} I_{j,h} \qquad\qquad \cdots\ (6)$$

Finally, the sales income calculation process 5016 determines whether the processes of steps S702 to S709 have been executed for all unit price rate vectors (S710) and returns to step S701 when a negative determination result is obtained. After that, the sales income calculation process 5016 repeats the processes of steps S701 to S710 while sequentially switching the unit price rate vector selected in step S701 to another non-processed unit price rate vector.

When the sales income has been calculated for all unit price rate vectors (S710: YES), the sales income calculation process 5016 ends the sales income calculation process.

According to this process, it is possible to estimate the number of contractors of each rate menu class after the unit price rate of a specific rate menu class is changed and to calculate the total income after the change using the changed rate menu class, the standard load data stream of each consumer class, and the estimated number of contractors.

(5-7) Supply Cost Calculation Process

The supply cost calculation process 5108 is a process of calculating the supply cost of the retail operator 5.

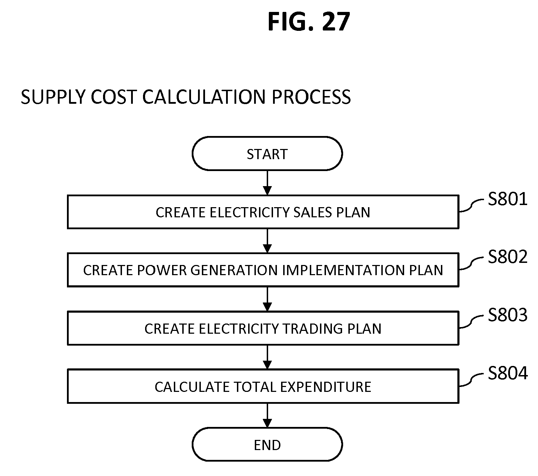

An example of this process will be described with reference to the flowchart of FIG. 27.

First, the supply cost calculation process 5108 generates an electricity sales plan based on the electricity usage pattern class table 5007A (S801). Here, the supply cost calculation process 5108 predicts the total demand of electricity based on the cluster consumer count and the representative load data stream of each of the plurality of electricity usage pattern classes appearing in the electricity usage pattern class table 5007A. The supply cost calculation process 5108 may acquire a consumer attribute data of each consumer appearing in the cluster consumer ID list and predict the total demand based on the consumer attribute data and the representative load data stream of each electricity usage pattern class.

Subsequently, the supply cost calculation process 5108 selects a power generated facility suitable for supplying electricity corresponding to an electricity sales plan by referring to the power generation information 5105A and generates a power generation implementation plan (S802). The power generation implementation plan indicates time-series data of the power generated output of the selected power generated facility.

Subsequently, the supply cost calculation process 5108 creates time-series data of surplus electricity and deficient electricity occurring when the power generated facility was operated according to the electricity sales plan generated in step S802 and the power generation implementation plan generated in step S802 (S803).

Finally, the supply cost calculation process 5108 calculates the total expenditure occurring when the power generation implementation plan and the electricity trading plan of the power generated facility were executed (S804).

According to this process, the supply cost calculation process 5108 can calculate the total expenditure which reflects the actual situation by calculating the total expenditure based on the electricity usage pattern class.

(5-8) Rate Menu Optimization Process

The rate menu optimization process 5017 is a process of calculating the total profit of each unit price rate vector using the sales income calculation result of each unit price rate vector obtained by the sales income calculation process 5016 and the supply cost calculation result of each unit price rate vector obtained by the supply cost calculation process 5108 and determining the unit price rate vector appropriate for maximizing the total profit.

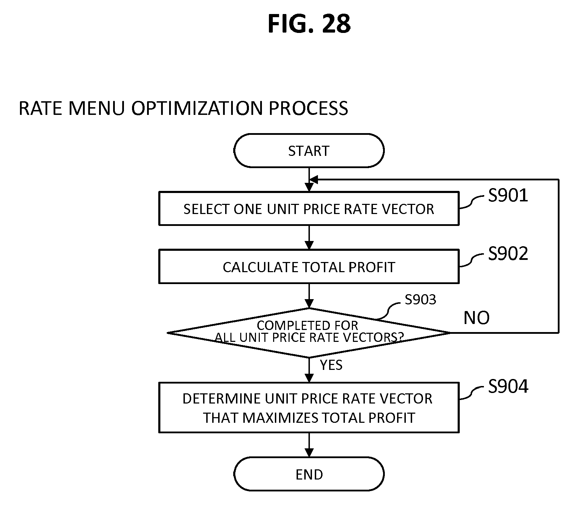

An example of this process will be described with reference to the flowchart of FIG. 28.

First, the rate menu optimization process 5017 selects one unit price rate vector among the plurality of unit price rate vectors generated by the consumer response estimation process 5014 (S901). Subsequently, the rate menu optimization process 5017 subtracts the total expenditure calculated by the supply cost calculation process 5108 from the total income calculated by the sales income calculation process 5016 with respect to the unit price rate vector selected in step S901 to calculate the total profit (S902).

Subsequently, the rate menu optimization process 5017 determines whether the process of step S902 has been executed for all unit price rate vectors (S903) and returns to step S901 when a negative determination result is obtained. After that, the rate menu optimization process 5017 repeats the processes of steps S901 to S903 while sequentially switching the unit price rate vector selected in step S901 to another non-processed unit price rate vector.

When the total profit has been calculated for all unit price rate vectors (S903: YES), the rate menu optimization process 5017 determines a unit price rate vector that maximizes the total profit as an optimal unit price rate vector (S904).

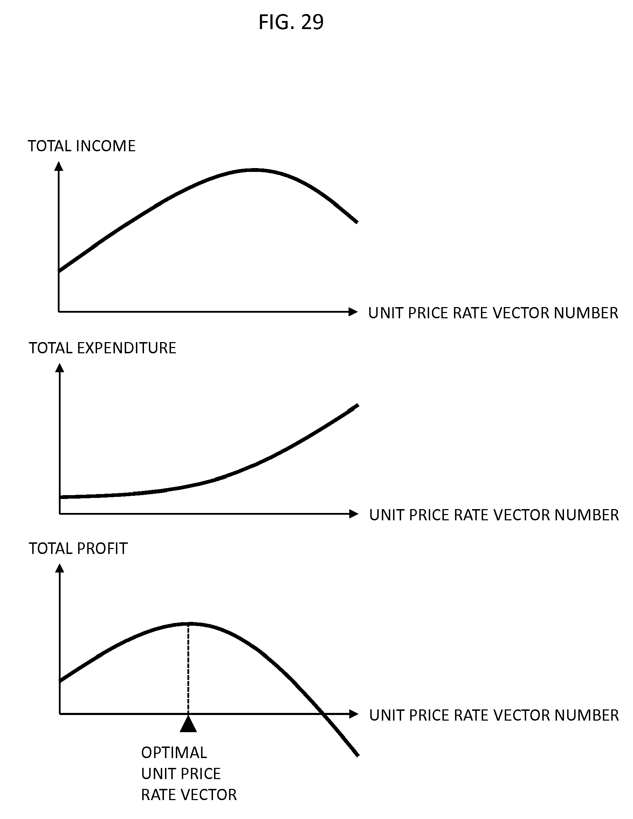

FIG. 29 illustrates a total income, a total expenditure, and a total profit for each unit price rate vector number. In this example, a curve that indicates the total profit of each unit price rate vector number is illustrated, and the unit price rate vector number appropriate for maximizing the total profit is determined. In this example, the larger the unit price rate vector number, the higher the unit price rate in each time period.

The rate menu optimization process 5017 transmits the total profit curve and information indicating the rate menu class, etc., based on the optimal unit price rate vector to the information input/output terminal 52 so that the information is displayed on the information input/output terminal 52. In this way, the retail operator 5 can check the calculated total profit and the selected unit price rate. The information input/output terminal 52 transmits confirmation information input by an administrator of the retail operator 5 in response to the display to the total income calculator 50. Upon receiving the confirmation, the electricity usage pattern class generation process 5011 updates the unit price rate in the rate menu class table 5009A with the unit price rate based on the optimal unit price rate vector.

The terms used for expressing the present invention will be described. A storage unit corresponds to the memory 5002 of the total income calculator 50, the storage unit 5006, the storage unit 5104 of the total expenditure calculator 51, the customer charge manager 53, and the like. A total income calculation unit corresponds to the CPU 5001 of the total income calculator 50, and the like. A total expenditure calculation unit corresponds to the CPU 5101 of the total expenditure calculator 51, and the like.

In the above-described embodiment, although the load data stream, the representative load data stream, and the standard load data stream indicating fluctuation in the electricity usage are data streams in a time domain, the data streams may be data streams in a frequency domain.

The electric power business profit and loss calculation system 1 may not include any one of the items of data and the processes described above. For example, the total income calculator 50 may not store the electricity usage pattern class table 5007A and may not include the standard load curve updating process. In this case, the total income calculator 50 may calculate the total income by the sales income calculation process 5016 using the initial standard load data stream. In this case, the total income calculator 50 can reflect the initial standard load curve input by the retail operator 5 on the total income.

While the embodiment of the present invention has been described, the embodiment is an example presented to describe the present invention and it is not indented to limit the scope of the present invention to the above-described configuration. The present invention can be implemented in various other forms.

**EP 3 104 323 A1**

Reference Signs List

an electric power business profit and loss calculation system 1
a power generation operator 2
a transmission and distribution operator 3
a transaction market operator 4
a retail operator 5
an alliance partner 6
a consumer 7
a network 8
a power generation information manager 20
a meter data manager 30
a transaction information manager 40
a total income calculator 50
a total expenditure calculator 51
an information input/output terminal 52
a customer charge manager 53
a consumer-dedicated information provider 54
a service information manager 60
a facility control terminal 70
an information input/output terminal 71

**Claims**

1. An electric power business profit and loss calculation system comprising:

   a storage unit; and
   a total income calculation unit connected to the storage unit, wherein
   the storage unit is configured to store consumer attribute data which is an attribute of electricity usage of each of a plurality of consumers,
   the storage unit is configured to store a load data stream indicating fluctuation in an amount of electricity usage measured for each of the plurality of consumers,
   the storage unit is configured to store a plurality of consumer classes, each consumer class including standard attribute data which is an attribute of the consumer class and a standard load data stream indicating a load curve that represents the consumer class,
   the storage unit is configured to store a plurality of rate menu classes, each rate menu class including a unit price rate of electricity usage and contractor data indicating a contractor of the rate menu class among the plurality of consumers, and
   the total income calculation unit is configured to calculate a total income from business of electric power supply to the plurality of consumers, based on the plurality of consumer classes and the plurality of rate menu classes.

2. An electric power business profit and loss calculation system according to claim 1, wherein
   the storage unit is configured to store a plurality of electricity usage pattern classes, each electricity usage pattern class including a representative load data stream indicating a load curve that represents the electricity usage pattern class,
   each consumer class includes association data indicating an electricity usage pattern class that is associated with the consumer class,
   the total income calculation unit is configured to associate, based on each load data stream, a consumer corresponding to the load data stream with any of the plurality of electricity usage pattern classes,
   the total income calculation unit is configured to calculate, based on a load data stream of the consumer associated with each electricity usage pattern class, a representative load data stream of the electricity usage pattern class, and
   the total income calculation unit is configured to calculate, based on a representative load data stream of the electricity usage pattern class associated with each consumer class, a standard load data stream of the consumer class.

3. An electric power business profit and loss calculation system according to claim 2, wherein

20

the total income calculation unit is configured to classify characteristics of respective load data streams into cluster groups and evaluate the cluster groups, the number of the cluster groups being each of a plurality of cluster number candidates, determine an optimal cluster number among the plurality of cluster number candidates, based on a result of evaluation corresponding to each of the plurality of cluster number candidates, and generate the optimal cluster number of electricity usage pattern classes, based on cluster groups corresponding to the optimal cluster number.

**4.** An electric power business profit and loss calculation system according to claim 2, wherein
the total income calculation unit is configured to classify the characteristics of respective load data streams into a plurality of clusters and calculate the representative load data stream, based on the center of each of the plurality of clusters.

**5.** An electric power business profit and loss calculation system according to claim 2, wherein
each electricity usage pattern class includes induction target data indicating whether the electricity usage pattern class is an induction destination of consumers,
each rate menu class includes a subscription condition which is a condition of an attribute with which a consumer is able to sign on the rate menu class,
the total income calculation unit is configured to specify, as a division consumer class, a consumer class associated with an induction target electricity usage pattern class which is the induction destination, and a non-induction target electricity usage pattern class which is not the induction destination, extract, as an extraction condition, the condition of the consumer attribute data of a consumer associated with the induction target electricity usage pattern class, based on the consumer attribute data of the consumer associated with the division consumer class, specify a rate menu class including a subscription condition identical to the standard attribute data of the division consumer class, and add the extraction condition to the subscription condition of the specified rate menu class.

**6.** An electric power business profit and loss calculation system according to claim 2, further comprising:

a total expenditure calculation unit configured to calculate a total expenditure in the electric power business, based on the electricity usage pattern class associated with each of the plurality of consumers, wherein
the total income calculation unit is configured to generate a plurality of unit price rate candidates by changing a unit price rate of a specific rate menu class in the plurality of rate menu classes,
the total income calculation unit is configured to calculate a plurality of total profits corresponding to the plurality of unit price rate candidates, by calculating the total income using each unit price rate candidate and calculating the total profit of the electric power business by subtracting the total expenditure from the total income, and
the total income calculation unit is configured to select a unit price rate candidate corresponding to the largest value of the plurality of total profits from the plurality of unit price rate candidates.

**7.** An electric power business profit and loss calculation system according to claim 1, wherein
for each rate menu class, the total income calculation unit is configured to store a history of an amount of merit that a contractor enjoys based on a change in the rate menu class and a history of the number of contractors based on the change in the rate menu class,
for each consumer class, the total income calculation unit is configured to identify a system model that receives the amount of merit and outputs the number of contractors,
the total income calculation unit is configured to set to a specific rate menu class a unit price rate candidate which is a candidate for a changed value of a unit price rate of a specific rate menu class among the plurality of rate menu classes, and
for each rate menu class, the total income calculation unit is configured to calculate the amount of merit of a change of the specific rate menu class, estimate the number of contractors of each rate menu class after the specific rate menu class is changed among consumers corresponding to an attributes of each consumer class, based on the calculated amount of merit and a system model of each consumer class, and calculate the total income using the estimated number of contractors.

**8.** An electric power business profit and loss calculation system according to claim 6, wherein
the total income calculation unit is configured to display on a display device at least any of the selected unit price rate candidate, the plurality of calculated total profits, and the largest value among the plurality of total profits.

**9.** An electric power business profit and loss calculation system according to claim 2, further comprising:

a total expenditure calculation unit configured to generate an electricity sales plan based on an electricity usage pattern class associated with each of the plurality of consumers, generate a power generation implementation plan for a power generation facility based on the electricity sales plan, generate an electricity trading plan of surplus electricity or deficient electricity based on the electricity sales plan and the power generation implementation plan, and calculate the expenditure in the electric power business based on the power generation implementation plan and the electricity trading plan.

**10.** An electric power business profit and loss calculation system according to claim 1, wherein
the attribute includes at least any of a type of a power receiving voltage of a consumer, a type of a holding facility of the consumer, a type of a building of the consumer, a type of a contract of the consumer in an alliance with an alliance partner of the electric power business, and a floor area of a building of the consumer.

**11.** An electric power business profit and loss calculation system according to claim 2, wherein
the total income calculation unit is configured to display on a display device at least any of the number of the plurality of electricity usage pattern classes, a representative load data stream of a specific electricity usage pattern class among the plurality of electricity usage pattern classes, a list of consumers associated with the specific electricity usage pattern classes, and the number of consumers associated with the specific electricity usage pattern classes.

**12.** An electric power business profit and loss calculation system according to claim 1, wherein
the total income calculation unit is configured to set a unit price rate candidate which is a candidate for a changed value of the unit price rate of a specific rate menu class among the plurality of rate menu classes,
for each consumer class, the total income calculation unit is configured to estimate the number of contractors of each rate menu class after the specific rate menu class is changed, and
the total income calculation unit is configured to calculate the total income, based on the changed specific rate menu class, a standard load data stream corresponding to each consumer class, and the estimated number of contractors.

**13.** An electric power business profit and loss calculation system according to claim 5, wherein
the standard attribute data includes a plurality of attribute items, and
the total income calculation unit is configured to select, as a target consumer, a consumer corresponding to the standard attribute data of the division consumer class, generate a decision tree including a node which is any of the plurality of attribute items, based on the standard attribute data of the division consumer class and the consumer attribute data of the target consumer, and extract the extraction condition, based on the decision tree.

**14.** An electric power business profit and loss calculation system according to claim 1, wherein
the total income calculation unit is configured to display on a display device a screen for inputting a load curve of each consumer class, generate the standard load data stream, based on the input load curve, and include the standard load data stream in the consumer class.

**15.** An electric power business profit and loss calculation method comprising:

storing consumer attribute data which is an attribute of electricity usage of each of a plurality of consumers;
storing a load data stream indicating fluctuation in an amount of electricity usage measured for each of the plurality of consumers;
storing a plurality of consumer classes, each consumer class including standard attribute data which is an attribute of the consumer class and a standard load data stream indicating a load curve that represents the consumer class,
storing a plurality of rate menu classes, each rate menu class including a unit price rate of electricity usage and contractor data indicating a contractor of the rate menu class among the plurality of consumers, and
calculating a total income from business of electric power supply to the plurality of consumers, based on the plurality of consumer classes and the plurality of rate menu classes.

# FIG. 1

ELECTRIC POWER BUSINESS PROFIT AND LOSS CALCULATION SYSTEM 1

POWER GENERATION OPERATOR 2

POWER GENERATION INFORMATION MANAGER 20

TRANSMISSION AND DISTRIBUTION OPERATOR 3

METER DATA MANAGER 30

TRANSACTION MARKET OPERATOR 4

TRANSACTION INFORMATION MANAGER 40

RETAIL OPERATOR 5

TOTAL INCOME CALCULATOR 50

TOTAL EXPENDITURE CALCULATOR 51

INFORMATION INPUT/OUTPUT TERMINAL 52

55

CUSTOMER CHARGE MANAGER 53

CONSUMER-DEDICATED INFORMATION PROVIDER 54

8

CONSUMER 7

FACILITY CONTROL TERMINAL 70

INFORMATION INPUT/OUTPUT TERMINAL 71

ALLIANCE PARTNER 6

SERVICE INFORMATION MANAGER 60

# FIG. 2

TOTAL INCOME CALCULATOR

CPU — 5001

5000

5006

50

MEMORY — 5002

STORAGE UNIT

ELECTRICITY USAGE PATTERN MANAGEMENT UNIT — 5003

ELECTRICITY USAGE PATTERN CLASS — 5007 / 5007A

CONTRACTOR INFORMATION MANAGEMENT UNIT — 5004

CONSUMER CLASS — 5008 / 5008A

RATE MENU MANAGEMENT UNIT — 5005

RATE MENU CLASS — 5009 / 5009A

COMMUNICATION UNIT — 5010

55

INFORMATION INPUT/OUTPUT TERMINAL — 52

# FIG. 3

# FIG. 4

# FIG. 5

ELECTRICITY USAGE PATTERN CLASS TABLE

5007A

| ELECTRICITY USAGE PATTERN CLASS ID | ITEM | VALUE |
|---|---|---|
| ELECTRICITY USAGE PATTERN CLASS ID=1 | REPRESENTATIVE LOAD DATA STREAM | {150kW, 120kW, ·····, 130kW} |
| | CLUSTER CONSUMER COUNT | 200 UNITS |
| | CLUSTER CONSUMER ID LIST | {1,6, ·····, 1254} |
| | INDUCTION TARGET CLASSIFICATION | INDUCTION TARGET |
| ELECTRICITY USAGE PATTERN CLASS ID=2 | REPRESENTATIVE LOAD DATA STREAM | {120kW, 125kW, ·····, 115kW} |
| | CLUSTER CONSUMER COUNT | 180 UNITS |
| | CLUSTER CONSUMER ID LIST | {2,8, ·····, 1301} |
| | INDUCTION TARGET CLASSIFICATION | NON-INDUCTION TARGET |
| ... | ... | ... |

5007A1          5007A2                    5007A3

# FIG. 6

CONSUMER CLASS TABLE
5008A

| CONSUMER CLASS ID | ITEM | | VALUE |
|---|---|---|---|
| CONSUMER CLASS ID=1 | STANDARD LOAD DATA STREAM | | {130kW, 140kW, ······, 130kW} |
| | ELECTRICITY USAGE PATTERN CLASS ID LIST | | {1, 3, 4} |
| | SAMPLE CONSUMER COUNT | | 190 UNITS |
| | SAMPLE CONSUMER ID LIST | | {1, 5, ······, 1286} |
| | CONSUMER ATTRIBUTE | POWER RECEIVING VOLTAGE | HIGH VOLTAGE |
| | | BUILDING TYPE | PLANT |
| | | HOLDING FACILITY | {NIGHT HEAT STORAGE DEVICE, DEMAND CONTROLLER} |
| | | BASIC CONTRACT | {MIDNIGHT DISCOUNT, DEMAND RESPONSE} |
| | | ALLIANCE PARTNER CONTRACT | SUBSCRIBED TO PLAN B |
| | SUBSCRIBABLE RATE MENU CLASS ID LIST | | {1, 2, 7} |
| CONSUMER CLASS ID=2 | STANDARD LOAD DATA STREAM | | {120kW, 115kW, ······, 120kW} |
| | ELECTRICITY USAGE PATTERN CLASS ID LIST | | {2} |
| | SAMPLE CONSUMER COUNT | | 170 UNITS |
| | SAMPLE CONSUMER ID LIST | | {2, 9, ······, 1154} |
| | CONSUMER ATTRIBUTE | POWER RECEIVING VOLTAGE | LOW VOLTAGE |
| | | BUILDING TYPE | OFFICE |
| | | HOLDING FACILITY | - |
| | | BASIC CONTRACT | {SUMMER DISCOUNT} |
| | | ALLIANCE PARTNER CONTRACT | SUBSCRIBED TO PLAN A |
| | SUBSCRIBABLE RATE MENU CLASS ID LIST | | {3, 4, 5} |
| ······ | ······ | | ······ |

5008A1          5008A2          5008A3

# FIG. 7

RATE MENU CLASS TABLE

5009A

| RATE MENU CLASS ID | ITEM | | | VALUE |
|---|---|---|---|---|
| RATE MENU CLASS ID=1 | RATE MENU CONTRACTOR COUNT | | | 200 UNITS |
| | RATE MENU CONTRACTOR ID | | | {4, 6, ······, 1163} |
| | UNIT PRICE RATE | | 8 TO 24 O'CLOCK | 19 Yen/kWh |
| | | | 0 TO 8 O'CLOCK | 12 Yen/kWh |
| | SUBSCRIPTION CONDITION | | POWER RECEIVING VOLTAGE | HIGH VOLTAGE |
| | | | HOLDING FACILITY | NIGHT HEAT STORAGE DEVICE |
| | | | BUILDING TYPE | BUILDING |
| | | | ALLIANCE PARTNER CONTRACT | - |
| RATE MENU CLASS ID=2 | RATE MENU CONTRACTOR COUNT | | | 150 UNITS |
| | RATE MENU CONTRACTOR ID | | | {3, 8, ······, 1082} |
| | UNIT PRICE RATE | | 10 TO 17 O'CLOCK (SUMMER) | 38 Yen/kWh |
| | | | 10 TO 17 O'CLOCK (OTHER SEASONS) | 31 Yen/kWh |
| | | | 7 TO 10 O'CLOCK, 17 TO 23 OCLOCK | 25 Yen/kWh |
| | | | 23 TO 7 O'CLOCK | 12 Yen/kWh |
| | SUBSCRIPTION CONDITION | | POWER RECEIVING VOLTAGE | LOW VOLTAGE |
| | | | HOLDING FACILITY | NIGHT HEAT STORAGE DEVICE |
| | | | BUILDING TYPE | OFFICE |
| | | | ALLIANCE PARTNER CONTRACT | SUBSCRIBED TO PLAN A |
| ······ | ······ | | | ······ |

5009A1      5009A2      5009A3

# FIG. 8

ELECTRICITY USAGE PATTERN CLASS GENERATION PROCESS

```
          ┌─────────────┐
          │    START     │
          └─────────────┘
                 │
                 ▼
    ┌─────────────────────────┐
    │   CLUSTERING PROCESS     │ ── S10
    └─────────────────────────┘
                 │
                 ▼
    ┌─────────────────────────────────────┐
    │  CLUSTER NUMBER APPROPRIATENESS      │ ── S11
    │  EVALUATION VALUE CALCULATION PROCESS│
    └─────────────────────────────────────┘
                 │
                 ▼
    ┌─────────────────────────┐
    │  OPTIMAL CLUSTER NUMBER  │ ── S12
    │   DETERMINING PROCESS    │
    └─────────────────────────┘
                 │
                 ▼
          ┌─────────────┐
          │     END      │
          └─────────────┘
```

# FIG. 9

CLUSTERING PROCESS

```
                    ┌─────────────┐
                    │    START    │
                    └──────┬──────┘
                           │
        ┌──────────────────────────────────────┐  S101
        │    SELECT ONE CLUSTER NUMBER K        │
        └──────────────────┬───────────────────┘
                           │
        ┌──────────────────────────────────────┐  S102
        │    DETERMINE INITIAL VALUE            │
        │    OF CLUSTER CENTER {Ck}             │
        └──────────────────┬───────────────────┘
                           │
        ┌──────────────────────────────────────┐  S103
        │    CALCULATE CHARACTERISTIC AMOUNT Si │
        │    OF EACH CONSUMER                    │
        └──────────────────┬───────────────────┘
                           │
        ┌──────────────────────────────────────┐  S104
        │    SELECT ONE CONSUMER i              │
        └──────────────────┬───────────────────┘
                           │
        ┌──────────────────────────────────────┐  S105
        │    SORT ANY ONE OF CONSUMER i TO CLUSTER │
        └──────────────────┬───────────────────┘
                           │
               S106   ◇ COMPLETED FOR        ◇
          NO ◄────────   ALL CONSUMERS i?
                           │ YES
        ┌──────────────────────────────────────┐  S107
        │    UPDATE CLUSTER CENTER {Ck}         │
        └──────────────────┬───────────────────┘
                           │
               S108   ◇ CHANGE AMOUNT IS     ◇
         YES ◄────────   CERTAIN VALUE OR MORE?
                           │ NO
        ┌──────────────────────────────────────┐  S109
        │    STORE CLUSTER CENTER {Ck}          │
        │    AND CLUSTER CONSUMER ID LIST {Xk}  │
        └──────────────────┬───────────────────┘
                           │
               S110   ◇ COMPLETED             ◇  NO
                          FOR ALL CLUSTER NUMBERS?
                           │ YES
                    ┌─────────────┐
                    │     END     │
                    └─────────────┘
```

# FIG. 10

CLUSTER NUMBER APPROPRIATENESS EVALUATION VALUE CALCULATION PROCESS

```
                    ┌─────────────┐
                    │    START    │
                    └─────────────┘
                           │
          ┌────────────────────────────────────┐
          │     SELECT ONE CLUSTER NUMBER K     │  ⌐ S111
          └────────────────────────────────────┘
                           │
          ┌────────────────────────────────────┐
          │    CALCULATE INTRA-CLUSTER ERROR    │  ⌐ S112
          └────────────────────────────────────┘
                           │
          ┌────────────────────────────────────┐
          │ CALCULATE INTRA-CLUSTER CONFORMITY E (k) │  ⌐ S113
          └────────────────────────────────────┘
                           │
          ┌────────────────────────────────────┐
          │     CALCULATE BOUNDARY SURFACE g    │  ⌐ S114
          │  CAPABLE OF SEPARATING CLUSTERPAIRS │
          └────────────────────────────────────┘
                           │
          ┌────────────────────────────────────┐
          │     CALCULATE INTER-CLUSTER         │  ⌐ S115
          │      AVERAGE SEPARATION B (K)       │
          └────────────────────────────────────┘
                           │             ⌐ S116
                      ◇ COMPLETED ◇                NO
                   FOR ALL CLUSTER NUMBERS?  ─────────┐
                           │                          │
                          YES                         │
                    ┌─────────────┐                   │
                    │     END     │                   │
                    └─────────────┘
```

# FIG. 11

OPTIMAL CLUSTER NUMBER DETERMINING PROCESS

```
                    ┌──────────────┐
                    │    START     │
                    └──────┬───────┘
                           ▼
    ┌─────────────────────────────────────────────┐      S121
    │ DETERMINE CONFORMITY OPTIMAL CLUSTER NUMBER  │
    └──────────────────────┬──────────────────────┘
                           ▼
    ┌─────────────────────────────────────────────┐      S122
    │ DETERMINE SEPARATION OPTIMAL CLUSTER NUMBER  │
    └──────────────────────┬──────────────────────┘
                           ▼
    ┌─────────────────────────────────────────────┐      S123
    │      DETERMINE OPTIMAL CLUSTER NUMBER        │
    └──────────────────────┬──────────────────────┘
                           ▼
    ┌─────────────────────────────────────────────┐      S124
    │ CREATE ELECTRICITY USAGE PATTERN CLASS TABLE │
    └──────────────────────┬──────────────────────┘
                           ▼
                    ┌──────────────┐
                    │     END      │
                    └──────────────┘
```

# FIG. 12

APPROPRIATENESS INDEX

E (K)

B (K)

CLUSTER NUMBER

CONFORMITY
OPTIMAL
CLUSTER
NUMBER

SEPARATION
OPTIMAL
CLUSTER
NUMBER

# FIG. 13

(NA)       (NB)       (NC)

# FIG. 14

## CONSUMER CLASS REGISTRATION SCREEN

5201

### SETTING OF POWER RECEIVING VOLTAGE

| POWER RECEIVING VOLTAGE | HIGH VOLTAGE ▽ |
|---|---|

### SETTING OF BUILDING TYPE

| BUILDING TYPE | OFFICE ▽ |
|---|---|

### SETTING OF HOLDING FACILITY

| HOLDING FACILITY | NIGHT HEAT STORAGE DEVICE ▽ | ADD |
|---|---|---|

【PRESENTLY SELECTED HOLDING FACILITY】
DEMAND CONTROLLER, NIGHT HEAT STORAGE DEVICE

### SETTING OF BASIC CONTRACT

| BASIC CONTRACT | MIDNIGHT DISCOUNT ▽ | ADD |
|---|---|---|

【PRESENTLY SELECTED BASIC CONTRACT】
DEMAND RESPONSE, MIDNIGHT DISCOUNT

5202

### INITIAL STANDARD LOAD CURVE

DEMAND AMOUNT (vertical axis)

JAN    APR    JUL    OCT

5203

| ADD TO CONSUMER CLASS TABLE |
|---|

# FIG. 15

| CONSUMER CLASS ID | CONSUMER ATTRIBUTE | | | | | | | | | INITIAL STANDARD LOAD DATA STREAM |
|---|---|---|---|---|---|---|---|---|---|---|
| | POWER RECEIVING VOLTAGE | BUILDING TYPE | HOLDING FACILITY | | | BASIC CONTRACT | | | | |
| | | | NIGHT HEAT STORAGE DEVICE | HOUSE BATTERY | DEMAND CONTROLLER | NIGHT-TIME DISCOUNT | WEEKEND DISCOUNT | SUMMER PREMIUM | DEMAND RESPONSE | |
| 1 | HIGH VOLTAGE | PLANT | ○ | ○ | ○ | ○ | ○ | ○ | ○ | {120kW, 130kW, ···, 125kW} |
| 2 | HIGH VOLTAGE | PLANT | ○ | ○ | × | ○ | ○ | ○ | ○ | {110kW, 120kW, ···, 115kW} |
| ······ | ···· | ···· | ······ | ······ | ······ | ······ | ······ | ······ | ······ | ······ |
| 127 | HIGH VOLTAGE | PLANT | × | × | ○ | × | × | × | × | {80kW, 100kW, ···, 90kW} |
| 128 | HIGH VOLTAGE | PLANT | × | × | × | × | × | × | × | {70kW, 75kW, ···, 65kW} |
| 129 | HIGH VOLTAGE | OFFICE | ○ | ○ | ○ | ○ | ○ | ○ | ○ | {105kW, 110kW, ···, 100kW} |
| 130 | HIGH VOLTAGE | OFFICE | ○ | ○ | × | ○ | ○ | ○ | × | {110kW, 100kW, ···, 115kW} |
| ······ | ···· | ···· | ······ | ······ | ······ | ······ | ······ | ······ | ······ | ······ |
| 255 | HIGH VOLTAGE | OFFICE | × | × | ○ | × | × | × | × | {90kW, 85kW, ···, 95kW} |
| 256 | HIGH VOLTAGE | OFFICE | × | × | × | × | × | × | × | {120kW, 125kW, ···, 130kW} |
| 257 | LOW VOLTAGE | PLANT | ○ | ○ | ○ | ○ | ○ | ○ | ○ | {100kW, 110kW, ···, 105kW} |
| 258 | LOW VOLTAGE | PLANT | ○ | ○ | × | ○ | ○ | ○ | × | {85kW, 95kW, ···, 100kW} |
| ······ | ···· | ···· | ······ | ······ | ······ | ······ | ······ | ······ | ······ | ······ |
| 383 | LOW VOLTAGE | PLANT | × | × | ○ | × | × | × | × | {80kW, 75kW, ···, 70kW} |
| 384 | LOW VOLTAGE | PLANT | × | × | × | × | × | × | × | {85kW, 100kW, ···, 110kW} |
| 385 | LOW VOLTAGE | OFFICE | ○ | ○ | ○ | ○ | ○ | ○ | ○ | {120kW, 105kW, ···, 110kW} |
| 386 | LOW VOLTAGE | OFFICE | ○ | ○ | × | ○ | ○ | ○ | × | {125kW, 130kW, ···, 125kW} |
| ······ | ···· | ···· | ······ | ······ | ······ | ······ | ······ | ······ | ······ | ······ |
| 511 | LOW VOLTAGE | OFFICE | × | × | ○ | × | × | × | × | {110kW, 130kW, ···, 120kW} |
| 512 | LOW VOLTAGE | OFFICE | × | × | × | × | × | × | × | {130kW, 135kW, ···, 130kW} |

# FIG. 16

(C1)

DEMAND AMOUNT

PEAK CUT

JAN FEB MAR APR MAY JUN JUL AUG SEP OCT NOV DEC

(C1a)

DEMAND AMOUNT

8/1 0:00 ∼ 8/4 0:00

PEAK CUT

8/1
0:00
8/2
0:00
8/3
0:00
8/4
0:00

(C2)

DEMAND AMOUNT

JAN FEB MAR APR MAY JUN JUL AUG SEP OCT NOV DEC

(C2a)

DEMAND AMOUNT

8/1 0:00 ∼ 8/4 0:00

8/1
0:00
8/2
0:00
8/3
0:00
8/4
0:00

# FIG. 17

CONSUMER CLASS CUSTOMIZATION PROCESS

```
            ┌──────────────┐
            │    START     │
            └──────┬───────┘
                   │
     ┌─────────────▼─────────────┐
     │  DIAGNOSIS DECISION TREE   │── S20
     │    GENERATION PROCESS      │
     └─────────────┬─────────────┘
                   │
     ┌─────────────▼─────────────┐
     │  CLASSIFICATION ATTRIBUTE  │── S21
     │     EXTRACTION PROCESS     │
     └─────────────┬─────────────┘
                   │
     ┌─────────────▼─────────────┐
     │STANDARD LOAD CURVE UPDATING PROCESS│── S22
     └─────────────┬─────────────┘
                   │
            ┌──────▼───────┐
            │     END      │
            └──────────────┘
```

# FIG. 18

DIAGNOSIS DECISION TREE GENERATION PROCESS

START

SELECT ONE CONSUMER CLASS j — S201

ACQUIRE INDUCTION TARGET CLASSIFICATION OF ELECTRICITY USAGE PATTERN CLASS BELONGING TO CONSUMER CLASS j — S202

DIVISION NECESSARY? — S203   NO

YES

SET CLUSTER CONSUMER ID LIST SET AND ATTRIBUTE ITEM SET — S204

SELECT ONE NON-PROCESSED NODE — S205

CALCULATE AVERAGE INFORMATION AMOUNT — S206

SELECT ONE ATTRIBUTE ITEM Ap FROM ATTRIBUTE INFORMATION OF CONSUMER CLASS j — S207

SUM INFORMATION GAIN OF ATTRIBUTE ITEM Ap — S208

COMPLETED FOR ALL ATTRIBUTE ITEMS? — S209   NO

YES

SET ATTRIBUTE ITEM HAVING LARGEST INFORMATION GAIN AS PRESENT NODE — S210

ADD CHILD NODE UNDER PRESENT NODE — S211

SET CLUSTER CONSUMER ID LIST SET AND ATTRIBUTE ITEM SET OF EACH CHILD NODE — S212

COMPLETED FOR ALL NODES? — S213   NO

YES

STORE DIAGNOSIS DECISION TREE — S214

COMPLETED FOR ALL CONSUMER CLASSES? — S215   NO

YES

END

# FIG. 19

CLASSIFICATION ATTRIBUTE EXTRACTION PROCESS

START

SELECT ONE CONSUMER CLASS j ⟶ S221

EXTRACT CLASSIFICATION ATTRIBUTE INFORMATION ⟶ S222

STORE CLASSIFICATION ATTRIBUTE INFORMATION ⟶ S223

COMPLETED FOR ALL CONSUMER CLASSES? — S224  NO

YES

END

# FIG. 20

# FIG. 21

## STANDARD LOAD CURVE UPDATING PROCESS

```
                    ┌──────────────┐
                    │    START     │
                    └──────────────┘
                           │
    ┌──────────────────────────────────────────────┐
    │        SELECT ONE CONSUMER CLASS j            │── S231
    └──────────────────────────────────────────────┘
                           │
    ┌──────────────────────────────────────────────┐
    │   ACQUIRE CLUSTER CENTER {Ck} BY REFERRING TO │── S232
    │ ELECTRICITY USAGE PATTERN CLASS ID LIST OF    │
    │           CONSUMER CLASS j                    │
    └──────────────────────────────────────────────┘
                           │
    ┌──────────────────────────────────────────────┐
    │         UPDATE STANDARD LOAD CURVE            │── S233
    │            OF CONSUMER CLASS j                │
    └──────────────────────────────────────────────┘
                           │
                                          S234
                    COMPLETED FOR
                 ALL CONSUMER CLASSES? ──────────── NO
                           │ YES
                    ┌──────────────┐
                    │     END      │
                    └──────────────┘
```

# FIG. 22

SUBSCRIPTION CONDITION ADDING PROCESS

```
                    ┌─────────┐
                    │  START  │
                    └────┬────┘
                         ↓
         ┌──────────────────────────────────┐    ┌ S301
         │  SELECT ONE CONSUMER CLASS j      │
         └──────────────┬───────────────────┘
                        ↓
         ┌──────────────────────────────────┐    ┌ S302
         │  SELECT ONE RATE MENU CLASS h     │
         └──────────────┬───────────────────┘
                        ↓
         ┌──────────────────────────────────┐    ┌ S303
         │ ADD CLASSIFICATION ATTRIBUTE      │
         │ INFORMATION TO SUBSCRIPTION       │
         │ CONDITION OF RATE MENU CALSS h    │
         └──────────────┬───────────────────┘
                        ↓                S304
              NO   ◇ COMPLETED FOR ◇
         ←────────◇ ALL RATE MENU CLASSES? ◇
                        │ YES
                        ↓                S305
              NO   ◇ COMPLETED FOR ◇
         ────────◇ ALL CONSUMER CLASSES? ◇
                        │ YES
                    ┌────┴────┐
                    │   END   │
                    └─────────┘
```

# FIG. 23

CONSUMER RESPONSE MODEL CREATION PROCESS

START

SELECT ONE CONSUMER CLASS j — S401

SELECT ONE RATE MENU CLASS h — S402

ACQUIRE HISTORY DATA OF
AMOUNT OF MERIT ENJOYED BY
CONTRACTOR OF RATE MENU CLASS h — S403

ACQUIRE HISTORY DATA OF NUMBER OF
CONTRACTORS OF RATE MENU CLASS h — S404

S405
COMPLETED FOR
ALL RATE MENU CLASSES?

NO

YES

ESTIMATE SYSTEM MODEL PARAMETER — S406

S407
COMPLETED FOR
ALL CONSUMER CLASSES?

NO

YES

END

# FIG. 24

AMOUNT OF MERIT (FEE DISCOUNT RATE)
ENJOYED BY CONTRACTOR OF RATE MENU CLASS h

(HA)

NUMBER OF CONTRACTORS
OF RATE MENU CLASS h

(HB)

# FIG. 25

CONSUMER RESPONSE ESTIMATION PROCESS

```
                        START

SELECT ONE RATE MENU CLASS SUBJECTED TO         S601
REVISED UNIT PRICE RATE AND GENERATE
          A PLURALITY OF
     UNIT PRICE RATE VECTORS

    SELECT ONE UNIT PRICE RATE VECTOR           S602

        CALCULATE AMOUNT OF MERIT               S603

        SELECT ONE CONSUMER CLASS j             S604

     ACQUIRE CONSUMER RESPONSE MODEL            S605

           ESTIMATE NUMBER OF                   S606
         RESPONDED CONTRACTORS

     CALCULATE NUMBER OF CONTRACTORS            S607
      FOR EACH RATE MENU CLASS AMONG
  CONSUMERS BELONGING TO CONSUMER CLASS j

                                                S608
NO              COMPLETED FOR
             ALL CONSUMER CLASSES?

                      YES
                                                S609
                COMPLETED FOR                   NO
          ALL UNIT PRICE RATE VECTORS?

                      YES

                        END
```

# FIG. 26

## SALES INCOME CALCULATION PROCESS

START

SELECT ONE UNIT PRICE RATE VECTOR — S701

SELECT ONE CONSUMER CLASS j — S702

ACQUIRE STANDARD LOAD CURVE — S703

SELECT ONE RATE MENU CLASS h — S704

ACQUIRE NUMBER OF CONTRACTORS
FOR EACH RATE MENU CLASS h
BELONGING TO CONSUMER CALSS j — S705

CALCULATE SALES INCOME OBTAINED BY
SELLING ELECTRICITY TO CONTRACTORS OF
RATE MENU CLASS h
BELONGING TO CONSUMER CLASS j — S706

COMPLETED FOR
ALL RATE MENU CLASSES? — S707
NO
YES

COMPLETED FOR
ALL CONSUMER CLASSES? — S708
NO
YES

CALCULATE TOTAL INCOME — S709

COMPLETED FOR
ALL UNIT PRICE RATE VECTORS? — S710
NO
YES

END

# FIG. 27

SUPPLY COST CALCULATION PROCESS

```
              ┌──────────┐
              │  START   │
              └──────────┘
                   │
                   ▼
  ┌─────────────────────────────────────────┐
  │    CREATE ELECTRICITY SALES PLAN         │──── S801
  └─────────────────────────────────────────┘
                   │
                   ▼
  ┌─────────────────────────────────────────┐
  │ CREATE POWER GENERATION IMPLEMENTATION   │──── S802
  │                 PLAN                     │
  └─────────────────────────────────────────┘
                   │
                   ▼
  ┌─────────────────────────────────────────┐
  │    CREATE ELECTRICITY TRADING PLAN       │──── S803
  └─────────────────────────────────────────┘
                   │
                   ▼
  ┌─────────────────────────────────────────┐
  │     CALCULATE TOTAL EXPENDITURE          │──── S804
  └─────────────────────────────────────────┘
                   │
                   ▼
              ┌──────────┐
              │   END    │
              └──────────┘
```

# FIG. 28

RATE MENU OPTIMIZATION PROCESS

START

SELECT ONE UNIT PRICE RATE VECTOR — S901

CALCULATE TOTAL PROFIT — S902

S903

COMPLETED FOR
ALL UNIT PRICE RATE VECTORS? — NO

YES

DETERMINE UNIT PRICE RATE VECTOR
THAT MAXIMIZES TOTAL PROFIT — S904

END

FIG. 29

TOTAL INCOME

UNIT PRICE RATE VECTOR NUMBER

TOTAL EXPENDITURE

UNIT PRICE RATE VECTOR NUMBER

TOTAL PROFIT

UNIT PRICE RATE VECTOR NUMBER

OPTIMAL
UNIT PRICE
RATE VECTOR

**EUROPEAN SEARCH REPORT**

Application Number

EP 16 17 3288

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/120370 A1 (KITAYAMA MASASHI [JP] ET AL) 26 June 2003 (2003-06-26) * abstract * * figure 10 * * paragraph [0023] - paragraph [0028] * | 1-15 | INV. G06Q30/02 G06Q50/06 |
| X | GIANFRANCO CHICCO ET AL: "Customer Characterization Options for Improving the Tariff Offer", 20030201, vol. 18, no. 1, 1 February 2003 (2003-02-01), XP011079266, * the whole document * | 1-15 | |
| X | NIZAR A H ET AL: "Load Profiling and Data Mining Techniques in Electricity Deregulated Market", 2006 IEEE POWER ENGINEERING SOCIETY GENERAL MEETING; 18-22 JUNE 2006; MONTREAL, QUE., CANADA, IEEE, PISCATAWAY, NJ, USA, 18 June 2006 (2006-06-18), pages 1-7, XP010943250, ISBN: 978-1-4244-0493-3 * the whole document * | 1-15 | |
| X | N. MAHMOUDI-KOHAN ET AL: "An annual framework for clustering-based pricing for an electricity retailer", ELECTRIC POWER SYSTEMS RESEARCH, vol. 80, no. 9, 1 September 2010 (2010-09-01), pages 1042-1048, XP055298619, AMSTERDAM, NL ISSN: 0378-7796, DOI: 10.1016/j.epsr.2010.01.010 * the whole document * | 1-15 | |

TECHNICAL FIELDS SEARCHED (IPC)

G06Q

The present search report has been drawn up for all claims

| Place of search | Date of completion of the search | Examiner |
|---|---|---|
| Munich | 5 September 2016 | Moser, Raimund |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 17 3288

This annex lists the patent family members relating to the patent documents cited in the above-mentioned European search report.
The members are as contained in the European Patent Office EDP file on
The European Patent Office is in no way liable for these particulars which are merely given for the purpose of information.

05-09-2016

| Patent document cited in search report | Publication date | Patent family member(s) | Publication date |
|---|---|---|---|
| US 2003120370 A1 | 26-06-2003 | JP 2003189471 A<br>US 2003120370 A1 | 04-07-2003<br>26-06-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008059125 A